# EUROPEAN PATENT SPECIFICATION

(11) **EP 3 925 401 B1**
(45) Date of publication and mention of the grant of the patent: **25.01.2023**
(21) Application number: 20706859.4
(22) Date of filing: 11.02.2020
(51) Int. Cl.: H04W 76/19, H04W 36/30

(54) **USER EQUIPMENT, RADIO NETWORK NODE AND METHODS FOR MANAGING RECOVERY PROCEDURES THEREIN**
BENUTZERGERÄT, FUNKNETZKNOTEN UND VERFAHREN ZUR VERWALTUNG VON WIEDERHERSTELLUNGSVERFAHREN DARIN
ÉQUIPEMENT UTILISATEUR, NOEUD DE RÉSEAU RADIO ET PROCÉDÉS DE GESTION DE PROCÉDURES DE RÉCUPÉRATION À L'INTÉRIEUR DE CELUI-CI

(30) Priority: 13.02.2019 US 201962804791 P
(43) Date of publication of application: 22.12.2021
(73) Proprietor: Telefonaktiebolaget LM Ericsson (publ), 164 83 Stockholm (SE)
(72) Inventor: BELLESCHI, Marco, 171 55 Solna (SE); KARLSSON, Robert, 174 62 Sundbyberg (SE); CHRISTOFFERSSON, Jan, 975 61 Luleå (SE); RUNE, Johan, 181 29 Lidingö (SE); WANG, Min, 977 53 Luleå (SE)
(74) Representative: Ericsson
(86) International application number: PCT/SE2020/050133
(87) International publication number: WO 2020/167219

(56) References cited:
- EP-A1- 2 285 176
- EP-A2- 3 214 791
- WO-A1-2008/151325
- WO-A1-2017/197264
- WO-A1-2018/031799

## Description

### TECHNICAL FIELD

Embodiments herein relate to a user equipment (UE), a radio network node and methods performed therein regarding wireless communication. Furthermore, a computer program product is also provided herein. In particular, embodiments herein relate to handling communication, such as handle or manage recovery procedures, e.g. detection of RLFs, in an efficient manner in a wireless communication network.

### BACKGROUND

In a typical wireless communication network, user equipment (UE), also known as wireless communication devices, mobile stations, stations (STA) and/or wireless devices, communicate via a Radio Access Network (RAN) with one or more core networks (CN). The RAN covers a geographical area which is divided into service areas or cell areas, with each service area or cell area being served by radio network node such as an access node e.g. a Wi-Fi access point or a radio base station (RBS), which in some networks may also be called, for example, a NodeB, a gNodeB, or an eNodeB. The service area or cell area is a geographical area where radio coverage is provided by the radio network node. The radio network node operates on radio frequencies to communicate over an air interface with the UEs within range of the radio network node. The radio network node communicates over a downlink (DL) to the UE and the UE communicates over an uplink (UL) to the radio network node.

A Universal Mobile Telecommunications System (UMTS) is a third generation telecommunication network, which evolved from the second generation (2G) Global System for Mobile Communications (GSM). The UMTS terrestrial radio access network (UTRAN) is essentially a RAN using wideband code division multiple access (WCDMA) and/or High-Speed Packet Access (HSPA) for communication with user equipment. In a forum known as the Third Generation Partnership Project (3GPP), telecommunications suppliers propose and agree upon standards for present and future generation networks and UTRAN specifically, and investigate enhanced data rate and radio capacity. In some RANs, e.g. as in UMTS, several radio network nodes may be connected, e.g., by landlines or microwave, to a controller node, such as a radio network controller (RNC) or a base station controller (BSC), which supervises and coordinates various activities of the plural radio network nodes connected thereto. The RNCs are typically connected to one or more core networks.

Specifications for the Evolved Packet System (EPS) have been completed within the 3GPP and this work continues in the coming 3GPP releases, such as 4G and 5G networks such as New Radio (NR). The EPS comprises the Evolved Universal Terrestrial Radio Access Network (E-UTRAN), also known as the Long-Term Evolution (LTE) radio access network, and the Evolved Packet Core (EPC), also known as System Architecture Evolution (SAE) core network. E-UTRAN/LTE is a 3GPP radio access technology wherein the radio network nodes are directly connected to the EPC core network. As such, the Radio Access Network (RAN) of an EPS has an essentially "flat" architecture comprising radio network nodes connected directly to one or more core networks.

With the emerging 5G technologies such as new radio (NR), the use of very many transmit- and receive-antenna elements is of great interest as it makes it possible to utilize beamforming, such as transmit-side and receive-side beamforming. Transmit-side beamforming means that the transmitter can amplify the transmitted signals in a selected direction or directions, while suppressing the transmitted signals in other directions. Similarly, on the receive-side, a receiver can amplify signals from a selected direction or directions, while suppressing unwanted signals from other directions.

Next generation systems are expected to support a wide range of use cases with varying requirements ranging from fully mobile devices to stationary loT or fixed wireless broadband devices. The traffic pattern associated with many use cases may be expected to consist of short or long bursts of data traffic with varying length of waiting period in between, here called inactive state. In NR, both license assisted access and standalone unlicensed operation are to be supported. Hence the procedure of Physical Random Access Channel (PRACH) transmission and/or Scheduling Request (SR) transmission in unlicensed spectrum may be investigated in 3GPP. In the following, channel sensing scheme based on listen before talk (LBT) and failures to access the channel may be analyzed for random access procedure and LBT scheme for PRACH and Physical Uplink Control Channel (PUCCH) may be introduced as a basis to address the solutions.

### Radio link failure.

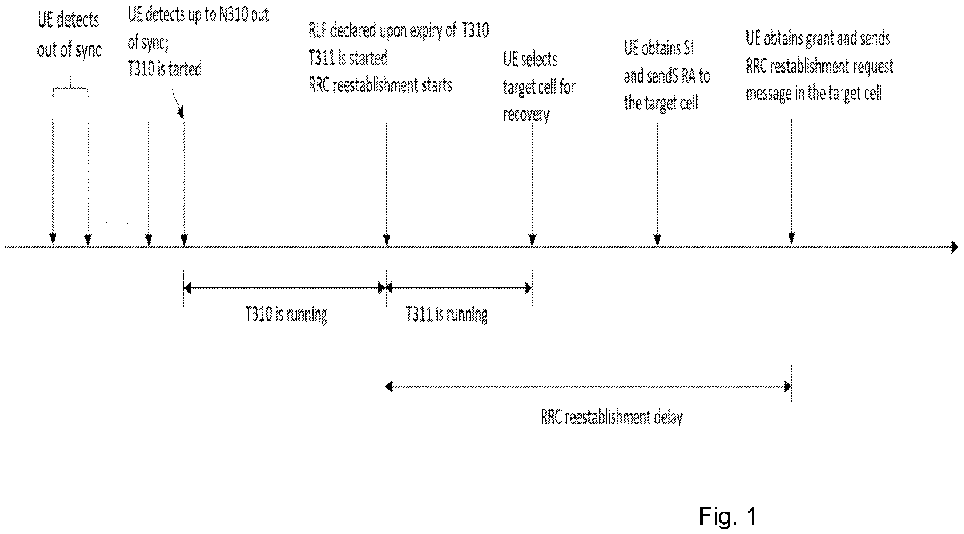

One intention of a radio link failure (RLF) procedure in LTE/NR is to assist an UE to perform a fast and reliable recovery without going via RRC_IDLE. It may be beneficial to avoid unnecessary latency due to the Random Access Channel (RACH) access in RRC IDLE. The procedure on radio link monitoring (RLM) and radio link failure detection/recovery is illustrated in **Fig 1.** Fig. 1 is an example on a RLM and RLF triggering and Radio Resource Control (RRC) reestablishment procedure.

In LTE and NR licensed, there may be several reasons that may lead to the radio link failure, including:
1) Timer T310 expiry.
   While the UE is in RRC connected mode, the UE monitors the downlink radio channel quality based on the downlink reference symbol. The UE compares the measured downlink channel quality with the out-of-sync (OOS) and in-sync (IS) thresholds, denoted Qout and Qin respectively. The physical layer evaluates the downlink channel quality and periodically sends indication on out-of-sync or in-sync, to layer 3. The UE layer 3 then evaluates if the radio link failure based on the in-sync and out-of-sync indications. When the consecutively received out-of-sync indications are beyond the counter threshold N310, a timer T310 is started. While T310 is running, the radio link is considered to be recovered if the UE layer 3 consecutively receives a number N311 in-sync indications from the physical layer. When the timer T310 expires, a radio link failure may be declared by the UE.
2) Maximum number of radio link control (RLC) retransmissions in uplink is reached.
3) Upon random access problem indication which means that PRACH preamble transmissions have reached the maximum counter, i.e., threshold denoted as PREAMBLE_TRANSMISSION_COUNTER.

In unlicensed operation RLM procedures, the RLM RSs may be subject to LBT failures. Therefore, a UE may miss one or several RS receptions, which may impact triggering of RLF. The same triggering reasons for a RLF are also applicable to the radio link belonging to secondary cell group (SCG). Upon detection of a SCG-RLF, the UE initiates the SCG failure information procedure to report SCG radio link failure to the gNB.

During a handover procedure, the timer T304 is started when the UE receives a handover command from the source cell, the value of the timer T304 may be set to allow the UE to try the maximum RACH access attempts to the target cell. When the timer T304 expires, a radio link failure due to handover may be declared.

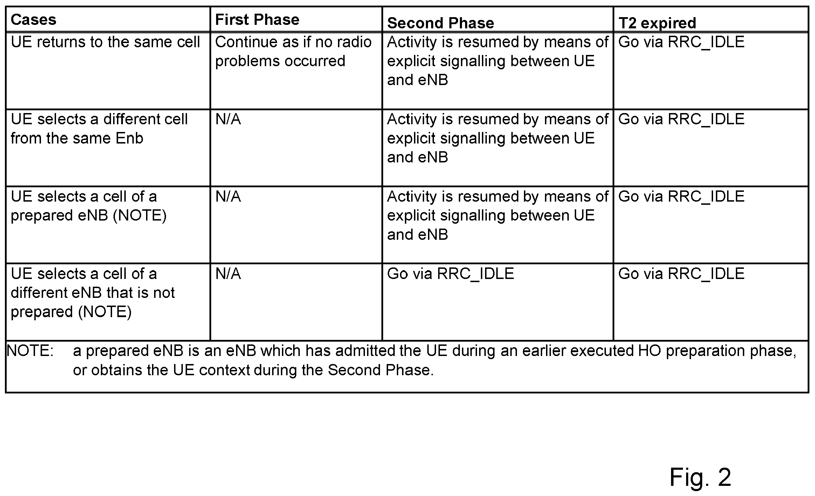

When a radio link failure is triggered, the radio connection re-establishment is triggered. A UE may first perform cell search to determine the best cell for radio link reestablishment. According to 3GPP TS 36.300 v.15.0.0, a UE may select the same cell, a different cell from the same eNB, or a prepared cell from a different eNB, wherein the activity may be resumed, i.e., the UE stays in connected mode, via radio connection reestablishment procedure since the previous UE context may be achieved by inter-cell communication. However, when a prepared cell is not available, the UE may select an unprepared cell (the cell cannot find the UE context fast enough, and will then signal a RRC reestablishment reject, or a RRC setup). In this case, the UE may have to go to idle mode and try to setup a new radio connection. **Fig. 2** from 3GPP TS 36.300 v.15.0.0 guides the UE behavior for target cell selection. Figure 2 shows a Mobility and Radio Link Failure procedure.

Channel access procedure in unlicensed spectrum.

In LTE, two different scheduling strategies have been specified for uplink (UL) transmissions on unlicensed spectrum.

In one scheme, also referred to as asynchronous UL, the eNB may schedule the UE in an asynchronous fashion, i.e. the eNB indicates in the Physical Downlink Control Channel (PDCCH) the specific Hybrid Automatic Repeat Request (HARQ) process that the UE shall transmit in a given subframe. That is different compared with UL transmissions on licensed spectrum in which HARQ operations are typically synchronous, i.e. the HARQ process that the UE shall transmit in a given subframe is connected to the subframe number.

The second scheme, also referred to as Autonomous uplink access (AUL), resembles semi-persistent scheduling (SPS) configuration where uplink grant periodically recurs following a certain periodic interval. Compared with the legacy LTE SPS, the difference is that in AUL it is up to the UE implementation when to perform (re)transmission of a certain HARQ process, and, under certain conditions, also whether to perform a new transmission or a retransmission. On the other hand, in the legacy LTE SPS, each subframe number is associated to a certain HARQ process that the UE may have to transmit when performing UL transmission in that subframe. Similarly, whether to perform a transmission or retransmission follows network indication, e.g. Acknowledgement (ACK)/Negative-acknowledgement (NACK) on Physical channel Hybrid ARQ Indicator Channel (PHICH) or PDCCH and New Data Indicator (NDI) indication. This implies that in AUL, the UE may need to signal to the eNB, e.g. in the uplink control information (UCI), to which HARQ process, the data transmitted on a certain physical uplink shared channel (PUSCH) refer to.

### LBT categories:

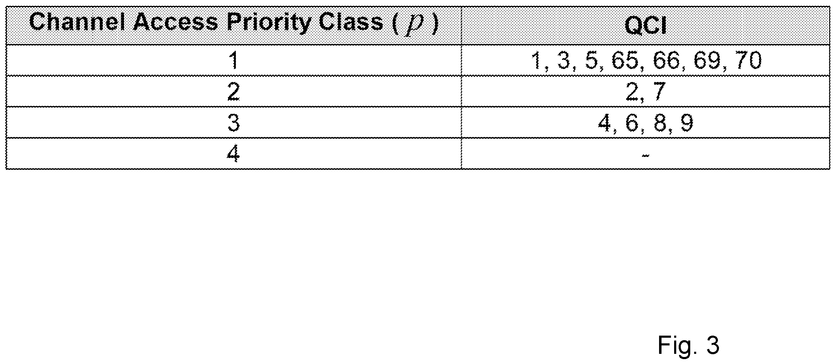

Listen-before-talk (LBT) is designed for unlicensed spectrum co-existence with other RATs and other users of the system. In this mechanism, a radio device applies a clear channel assessment (CCA) check before any transmission. The transmitter involves energy detection (ED) over a time period compared to a certain threshold, ED threshold, in order to determine if a channel is idle. Another CCA mechanism is to detect a known preamble. In case the channel is determined to be occupied, the transmitter performs a random back-off within a contention window before next CCA attempt. In order to protect the ACK transmissions, the transmitter must defer a period after each busy CCA slot prior to resuming back-off. As soon as the transmitter has grasped the channel, the transmitter is only allowed to perform transmission up to a maximum time duration, namely, the maximum channel occupancy time (MCOT). For quality of service (QoS) differentiation, a channel access priority based on the service type has been defined. For example, in LTE four LBT channel access priority classes (CAPC) are defined for differentiation of contention window sizes (CWS) and MCOT between services. In particular, in LTE the following mapping between CAPC and QoS Class Identifiers (QCI) is defined in **Fig. 3** from 3GPP TS 36.300 v.15.0.0.

Therefore, the eNB when scheduling uplink (UL)/DL traffic should take into account the QCI of the traffic to be transmitted. For uplink, the LBT class that the UE may need to use for a given UL transmission may either be signaled in the UL grant in PDCCH for dynamic scheduling or indicated as part of a logical channel configuration for autonomous licensed assisted access (LAA) UL transmissions. In the latter case, the UE shall apply the CAPC indicated in the logical channel configuration when autonomously transmitting data from that logical channel. In case there are multiple medium access control (MAC) service data units (SDU) multiplexed in the same MAC protocol data unit (PDU) and associated to different logical channels, the UE shall apply the lowest priority QCI of all the logical channels included in the MAC PDU.

The channel access schemes for NR-based access for unlicensed spectrum may be classified into the following categories:
Category 1: Immediate transmission after a short switching gap
   - This is used for a transmitter to immediately transmit after a UUDL switching gap inside a COT.
   - The switching gap from reception to transmission is to accommodate the transceiver turnaround time and is no longer than 16 µs.
Category 2: LBT without random back-off
   - The duration of time that the channel is sensed to be idle before the transmitting entity transmits is deterministic.
Category 3: LBT with random back-off with a contention window of fixed size
   - The LBT procedure has the following procedure as one of its components. The transmitting entity draws a random number N within a contention window. The size of the contention window is specified by the minimum and maximum value of N. The size of the contention window is fixed. The random number N is used in the LBT procedure to determine the duration of time that the channel is sensed to be idle before the transmitting entity transmits on the channel.
Category 4: LBT with random back-off with a contention window of variable size
   - The LBT procedure has the following as one of its components. The transmitting entity draws a random number N within a contention window. The size of contention window is specified by the minimum and maximum value of N. The transmitting entity can vary the size of the contention window when drawing the random number N. The random number N is used in the LBT procedure to determine the duration of time that the channel is sensed to be idle before the transmitting entity transmits on the channel.

For different transmissions in a COT and different channels/signals to be transmitted, different categories of channel access schemes may be used.

As described in 3GPP TR 38.889 v.16.0.0, if absence of Wi-Fi cannot be guaranteed, e.g. by regulation, in the band e.g. sub-7 GHz, where NR-U is operating, the baseline assumption is, the NR-U operating bandwidth is an integer multiple of 20 MHz.

Channel access mechanisms may need to comply with regulations and may therefore need to be adapted for particular frequency ranges.

For channel access mechanism, LTE-LAA LBT mechanism may be adopted as baseline for 5GHz band and adopted as the starting point of the design for 6 GHz band. At least for band where absence of Wi-Fi cannot be guaranteed (e.g. by regulation), LBT may be performed in bandwidth units of 20 MHz.

For 5 GHz band, having a 16 µs gap to accommodate for the transceiver turnaround before the immediate transmission of the responding node is beneficial for NR-U, such as for supporting fast A/N feedback, and is permitted per regulation. Restrictions/conditions on when this option may be used will be further identified, e.g., in consideration of fair coexistence.

A 16 µs gap to accommodate for the transceiver turnaround before the immediate transmission of the responding node may also be applied to 6 GHz band if allowed by regulation, and restrictions and/or conditions on when this option may be used will be further identified, if fair coexistence criterion is defined for 6 GHz band.

For CWS adjustment procedure in NR-U, in addition to aspects considered in LTE LAA, NR-U may additionally consider at least the following aspects: code block group (CBG) based HARQ-ACK operation, NR scheduling and HARQ-feedback delays and processing times, wideband (>20 MHz) operation including bandwidth parts (BWP), Configured grant operation.

Radio resource management (RRM) measurements in NR unlicensed spectrum.

In order to tackle the ever-increasing data demand, NR is considered for both licensed and unlicensed spectrum. The standardization work for licensed spectrum in Rel-15 is still on-going. Therefore, 3GPP has defined a study item on NR-based Access to Unlicensed Spectrum which was approved at RAN-77 and a work item that was approved at RAN-82. Compared to the LTE LAA, NR-U will support dual connectivity (DC) and standalone scenarios, where the MAC procedures including random access and scheduling procedure on unlicensed spectrum are subject to the LBT failures, while there was no such restriction in LTE LAA, since there was licensed spectrum in LAA scenario so the RACH and scheduling related signalling may be transmitted on the licensed spectrum instead of unlicensed spectrum.

The RRM procedures in NR-U will be similar to LAA, since NR-U is aiming to reuse LAA/eLAA/feLAA technologies as much as possible to handle the coexistence between NR-U and other legacy RATs. Channel access or selection for LAA was one important aspect for co-existence with other RATs such as Wi-Fi. For instance, LAA aimed to enable coexistence on carriers that are congested with Wi-Fi. Therefore, RRM measurement is one critical aspect that has been designed for congestion avoidance purpose.

In licensed spectrum, UE measures Reference Signal Received Power (RSRP), and Reference Signal Received Quality (RSRQ) of the downlink radio channel and provides the measurements in reports to its serving radio network node such as eNB or gNB. However, measurements do not reflect the interference strength on the carrier. The metric Received Signal Strength Indicator (RSSI) may serve for such purpose. At the eNB/gNB side, it is possible to derive RSSI based on the received RSRP and RSRQ reports, however, this requires that they are available. Due to the LBT failure, some reports in terms of RSRP or RSRQ may be blocked, for example because reference signal transmission, e.g. discovery reference signal (DRS), is blocked in the downlink or the measurement report is blocked in the uplink. Hence, the measurements in terms of RSSI may be useful as it may be measured without the need for DRSs. The RSSI measurements together with the time information concerning when and how long time that UEs have made the measurements may assist the gNB/eNB to detect hidden nodes. Additionally, the gNB/eNB may assess the load situation of the carrier to enable the network to prioritize some channels for load balancing and channel access failure avoidance.

LTE LAA supports measurements of averaged RSSI and channel occupancy (CO) for measurement reports. The channel occupancy is defined as percentage of time that RSSI was measured above a configured threshold. For this purpose, a RSSI measurement timing configuration (RMTC) includes a measurement duration, e.g. 1-5 ms, and a period between measurements, e.g. {40, 80, 160, 320, 640} ms.

Listen-before-talk (LBT) is designed for unlicensed spectrum co-existence between users and between RATs. With LBT, a radio device applies a clear channel assessment (CCA) check before any transmission. For example, the transmitter performs energy detection (ED) over a time period compared to a certain threshold, e.g. an ED threshold, in order to determine if a channel is idle. In case the channel is determined to be occupied, the transmitter may perform a random back-off within a contention window before next CCA attempt. In order to protect the ACK transmissions, the transmitter must defer a period after each busy CCA slot prior to resuming back-off. As soon as the transmitter has gained access to a channel, the transmitter is only allowed to perform transmission up to a maximum time duration, namely, the maximum channel occupancy time, MCOT. For QoS differentiation, a channel access priority based on the service type has been defined. For example, four LBT priority classes are defined for differentiation of contention window sizes (CWS) and MCOT between services.

Beam failure recovery procedure in NR.

In NR, the MAC entity may be configured by RRC with a beam failure recovery procedure which is used for indicating to the serving radio network node of a new synchronization signal block (SSB) or channel state information-reference signal (CSI-RS) when beam failure is detected on the serving SSB(s)/CSI-RS(s). Beam failure is detected by counting beam failure instance indication from the lower layers to the MAC entity.

The MAC entity shall:
1> if beam failure instance indication has been received from lower layers:
   2> start or restart the beamFailureDetectionTimer;
   2> increment BFI_COUNTER by 1;
   2> if BFI_COUNTER >= beamFailurelnstanceMaxCount:
      3> if beamFailureRecoveryConfig is configured:
         4> start the beamFailureRecoveryTimer, if configured;
         4> initiate a Random Access procedure (see subclause 5.1) on the SpCell by applying the parameters powerRampingStep, preambleReceivedTargetPower, and preambleTransMax configured in beamFailureRecoveryConfig.
      3> else:
         4> initiate a Random Access procedure (see subclause 5.1) on the SpCell.
1 > if the beamFailureDetectionTimer expires:
   2> set BFI_COUNTER to 0.
1> if the Random Access procedure is successfully completed (see subclause 5.1):
   2> stop the beamFailureRecoveryTimer, if configured;
   2> consider the Beam Failure Recovery procedure successfully completed. PUCCH SR failure handling procedure.

The Scheduling Request (SR) is used for requesting UL-SCH resources for new transmission.

The MAC entity may be configured with zero, one, or more SR configurations. An SR configuration consists of a set of PUCCH resources for SR across different BWPs and cells. For a logical channel, at most one PUCCH resource for SR is configured per BWP.

Each SR configuration corresponds to one or more logical channels. Each logical channel may be mapped to zero or one SR configuration, which is configured by RRC.

If an SR is triggered and there are no other SRs pending corresponding to the same SR configuration, the MAC entity may set the SR_COUNTER of the corresponding SR configuration to 0.

When an SR is triggered, it shall be considered as pending until it is cancelled. All pending SR(s) triggered prior to the MAC PDU assembly shall be cancelled and each respective sr-ProhibitTimer shall be stopped when the MAC PDU is transmitted and this PDU includes a BSR MAC CE which contains buffer status up to, and including, the last event that triggered a BSR prior to the MAC PDU assembly. All pending SR(s) shall be cancelled when the UL grant(s) can accommodate all pending data available for transmission.

Only PUCCH resources on a BWP which is active at the time of SR transmission occasion are considered valid.

As long as at least one SR is pending, the MAC entity shall for each pending SR:
1 > if the MAC entity has no valid PUCCH resource configured for the pending SR:
   2> initiate a Random Access procedure (see subclause 5.1) on the SpCell and cancel the pending SR.
1 > else, for the SR configuration corresponding to the pending SR:
   2> when the MAC entity has an SR transmission occasion on the valid PUCCH resource for SR configured; and
   2> if sr-ProhibitTimer is not running at the time of the SR transmission occasion; and
   2> if the PUCCH resource for the SR transmission occasion does not overlap with a measurement gap; and
   2> if the PUCCH resource for the SR transmission occasion does not overlap with a UL-SCH resource:
      3> if SR_COUNTER < sr-TransMax:
         4> increment SR_COUNTER by 1;
         4> instruct the physical layer to signal the SR on one valid PUCCH resource for SR;
         4> start the sr-ProhibitTimer.
      3> else:
         4> notify RRC to release PUCCH for all Serving Cells;
      4> notify RRC to release SRS for all Serving Cells;
      4> clear any configured downlink assignments and uplink grants;
      4> initiate a Random Access procedure (see subclause 5.1) on the SpCell and cancel all pending SRs.

NOTE: The selection of which valid PUCCH resource for SR to signal SR on when the MAC entity has more than one overlapping valid PUCCH resource for the SR transmission occasion is left to UE implementation.

The MAC entity may stop, if any, ongoing Random Access procedure due to a pending SR which has no valid PUCCH resources configured, which was initiated by MAC entity prior to the MAC PDU assembly. Such a Random Access procedure may be stopped when the MAC PDU is transmitted using a UL grant other than a UL grant provided by Random Access Response, and this PDU includes a Buffer Status Report (BSR) MAC control element (CE) which contains buffer status up to (and including) the last event that triggered a BSR prior to the MAC PDU assembly, or when the UL grant(s) may accommodate all pending data available for transmission.

WO 2018/031799 A1 discloses a method for connectivity supervision and recovery. A UE triggers recovery procedures if it determines a RLF. The procedures are triggered based upon a respective QoS requirement by applying a timer for starting a recovery procedure. EP 2 285 176 A1 describes a similar method which comprises triggering recovery procedures upon fulfilling one or more conditions that are related to QoS requirements. The timer is determined to be shorter if a QoS class priority is high. WO 2008/151325 A1 relates to a forward handover under RLF conditions. if a RLF condition remains for a particular time interval, the UE can initiate a forward handover. the timer interval is configured on a per-terminal basis, a per-sector basis or per QoS basis.

### SUMMARY

The invention is defined by independent claims 1, 8, 16 and 22. Further embodiments are defined by the dependent claims.

In NR-U Wl, below deployment scenarios have been agreed to study in release (Rel)-16:
The additional functionality needed beyond the specifications for operation in licensed spectrum in the following deployment scenarios.
   - Carrier aggregation between licensed band NR, in a primary cell (PCell), and NR-U in the secondary cell (SCell).
      ∘ NR-U SCell may have both DL and UL, or DL-only.
   - Dual connectivity between licensed band LTE in the PCell and NR-U in the Primary secondary cell (PSCell).
   - Stand-alone NR-U
   - An NR cell with DL in unlicensed band, i.e. NR-U, and UL in licensed band i.e. NR.
   - Dual connectivity between licensed band NR, e.g. in PCell and NR-U, e.g. in PSCell.

NR unlicensed operation may need to support both standalone and DC scenarios meaning that both RACH and PUCCH-SR signalling need to be transmitted over unlicensed spectrum cells, since a NR-U cell may operate as a primary cell. At the same time, the radio link monitoring function may also be defined by reusing the same mechanism as in NR licensed, where the SSB or CSI-RS may be configured for RLM purpose. Discovery reference signals as in LTE LAA/eLAA/feLAA is under discussion in RAN1 on whether/how it may also be supported for NR-U. Anyway, prior to any uplink or downlink transmission, an LBT operation may be performed in order to gain access to the channel.

In one case, an NR-U UE may experience consecutive LBT failures during uplink transmissions such as PRACH, or PUCCH-SR, sounding or data transmission. In another case, a radio network node may experience consecutive LBT failures for DL transmissions such as DRS, PDCCH or data.

Whether and how the LBT failures are counted for counters and timers of different MAC/RLC procedures, such as SR counter, RACH counter and RLC retransmission counter, are still under discussions in 3GPP. It may be expected that it is beneficial to not count/impact existing MAC/RLC counters by LBT failures. Otherwise, the on-going transmission or procedures may get stalled/delayed. The root cause for LBT failures may be due to system congestion. The best solution for a UE would be to quickly change serving cell/active BWP or carrier to one with lower congestion to avoid further LBT failures.

In unlicensed wireless systems, any UE that wants to access the system may not be allowed to, due to channel access regulations like CCA or similar, or it may not be heard at the intended receiver due to weak signals, or the UE may not hear the transmissions from other transmitters. To handle such cases, radio link monitoring and radio link failure detection may be used to make the UE aware of the problems and to take appropriate actions, for example, a recovery procedure to search for a new carrier frequency and attempt to access it.

The current NR standard has handling for RLM and RLF, but do not consider the additional channel access restrictions in unlicensed bands, such as CCA, and therefore the time until problems are detected might be long. In particular, problems making the current cell inappropriate to be connected in or connect to, which pertains to high radio channel load rather than poor radio channel quality, may not cause a suffering UE to take appropriate actions, like it may have in case of RLF detection/declaration, even though the net result of the two conditions are similar, i.e. that the UE is unable to use the cell or radio channel for communication.

In an unlicensed band, prior to any uplink or downlink transmission, a CCA, e.g., LBT may have to be performed in order to access the channel. In this case, an NR-U UE may experience consecutive LBT failures during uplink transmissions, such as L1 control signalling transmissions, i.e., PRACH, SRS or PUCCH, or PUSCH transmissions. The existing RLM/RLF/beam management procedure may not be able to recover from a situation where continuous loss of uplink/downlink transmissions due to LBT failures occur until the system congestion has gone over. The UE would then suffer a long latency, which may lead to non-acceptable QoS.

There may be some issues in e.g. the unlicensed spectrum such as:
Issue 1: the recovery procedure such as RRC reestablishment procedure have no or very limited information about the failure reason.
Issue 2: it is not a best option to always perform RRC reestablishment procedure at RLF.

An object herein is to provide a mechanism to enable communication, e.g. handle or manage recovery procedures such as detection of RLFs, in an efficient manner in a wireless communication network e.g. using unlicensed spectrum.

Embodiments herein may give the means to detect problems to access a wireless channel, e.g. CCA or LBT failures due to channel occupancy, which may be separated per QoS class, or per LBT type or priority , which are associated with different QoS requirements. When access problems are detected it enables a search for new carriers that may have better performance.

By having a general method for detecting channel access problems, the need that each different uplink channel access, e.g. RACH, PUCCH and PUSCH, implement separate counters and timers for channel access problems, e.g. due to CCA/LBT failures, may be avoided.

For cases where uplink and downlink share the same channel, problems for a radio network node to access the channel may be included and thus speed up problem detection for UEs when the channel occupancy is high.

Embodiments herein allow the radio network node, e.g. an NR-U gNB, to receive relevant information about UE's LBT failure and/or success statistics as well as about the channel occupancy situation perceived by connected UEs. Then the radio network node may take appropriate and well-founded actions to deal with problematic situations involving for example high channel occupancy. A failure report may be triggered earlier than RLF triggering, or a UE may switch to another active BWP without triggering a RLF. Usage of a specific report message for LBT failures may achieve more benefits compared to a pure RRC reestablishment procedure.

Thus, the radio network node is enabled to decide better actions in response to detected failures. For example, with accurate reports on e.g. failure reasons, the radio network node may take actions such as to update RAN configuration for a UE, reconfiguration of a group of UEs to save signalling overhead, etc.

Embodiments herein enable the radio network node to more efficiently control the performance of UEs, and to more efficiently utilize the spectrum available leading to an efficient communication in the wireless communication.

### BRIEF DESCRIPTION OF THE DRAWINGS

Embodiments will now be described in more detail in relation to the enclosed drawings, in which:
- Fig. 1: is a schematic overview depicting a procedure on radio link monitoring and radio link failure detection/recovery;
- Fig. 2: is a table depicting mobility and radio link failure;
- Fig. 3: is a table depicting mapping between channel access priority classes and QoS class identifiers;
- Fig. 4: is a schematic overview depicting a wireless communication network according to embodiments herein;
- Fig. 5: is a schematic flowchart depicting a method performed by a UE according to embodiments herein;
- Fig. 6: is a schematic flowchart depicting a method performed by a radio network node according to embodiments herein;
- Fig. 7: is a table depicting a timer and two counters for channel access priority classes;
- Fig. 8: is a block diagram depicting a UE according to embodiments herein;
- Fig. 9: is a block diagram depicting a radio network node according to embodiments herein;
- Fig. 10: is a telecommunication network connected via an intermediate network to a host computer in accordance with some embodiments;
- Fig. 11: is a host computer communicating via a base station with a user equipment over a partially wireless connection in accordance with some embodiments;
- Fig. 12: is methods implemented in a communication system including a host computer, a base station and a user equipment in accordance with some embodiments;
- Fig. 13: is methods implemented in a communication system including a host computer, a base station and a user equipment in accordance with some embodiments;
- Fig. 14: is methods implemented in a communication system including a host computer, a base station and a user equipment in accordance with some embodiments; and
- Fig. 15: is methods implemented in a communication system including a host computer, a base station and a user equipment in accordance with some embodiments.

### DETAILED DESCRIPTION

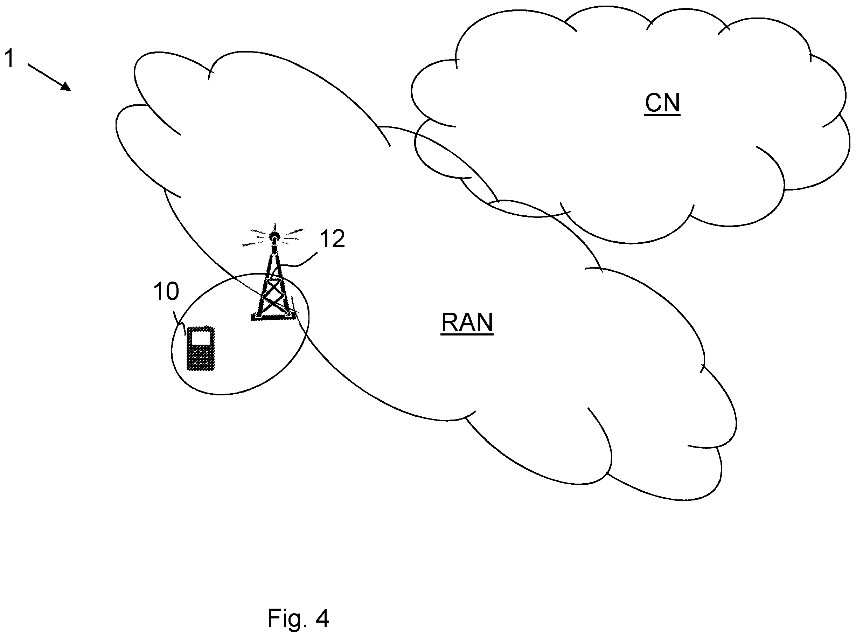

Embodiments herein relate to wireless communication networks in general. **Fig. 4** is a schematic overview depicting a **wireless communication network 1.** The wireless communication network 1 comprises one or more RANs and one or more CNs. The wireless communication network 1 may use one or a number of different technologies. Embodiments herein relate to recent technology trends that are of particular interest in a New Radio (NR) context, however, embodiments are also applicable in further development of existing wireless communications systems such as e.g. LTE or Wideband Code Division Multiple Access (WCDMA).

In the wireless communication network 1, a wireless device exemplified herein as **a UE 10** such as a mobile station, a non-access point (non-AP) STA, a STA, a user equipment and/or a wireless terminal, is comprised communicating via e.g. one or more Access Networks (AN), e.g. RAN, to one or more core networks (CN). It should be understood by the skilled in the art that "wireless device" is a non-limiting term which means any terminal, wireless communications terminal, user equipment, NB-loT device, Machine Type Communication (MTC) device, Device to Device (D2D) terminal, or node e.g. smart phone, laptop, mobile phone, sensor, relay, mobile tablets or even a small base station capable of communicating using radio communication with a radio network node within an area served by the radio network node.

The wireless communication network 1 comprises a **radio network node 12** providing radio coverage over a geographical area, a service area, of a radio access technology (RAT), such as NR, LTE, or similar. The radio network node 12 may be a transmission and reception point such as an access node, an access controller, a base station, e.g. a radio base station such as a gNodeB (gNB), an evolved Node B (eNB, eNode B), a NodeB, a base transceiver station, a radio remote unit, an Access Point Base Station, a base station router, a Wireless Local Area Network (WLAN) access point or an Access Point Station (AP STA), a transmission arrangement of a radio base station, a stand-alone access point or any other network unit or node capable of communicating with a wireless device within the area served by the radio network node depending e.g. on the first radio access technology and terminology used.

In embodiments herein the UE 10 triggers a recovery procedure upon fulfilling one or more conditions, wherein at least one condition of the one or more conditions is related to a QoS requirement or a level of QoS requirement of a service used by the UE 10.

Embodiments herein, thus, concern e.g. detection of radio link failures in the UE 10 for e.g. unlicensed channel access. Further, embodiments herein propose methods to enhance existing recovery procedures such as RLM, RLF, and/or beam management procedures to additionally consider e.g. the impact of consecutive LBT failures on QoS.

In one case, a configured recovery procedure, e.g., a RLF procedure, may be triggered earlier for the UE 10 with services with critical QoS requirements, e.g., with a strict latency requirement than one service with a less strict latency requirement.

In another case, a UE with services without critical QoS requirements may be configured to stay in the system although occurrence of consecutive LBT failures for the UE. Since for a UE with delay insensitive services, it may be better to avoid the UE from triggering recovery and/or switch procedures, and thereby avoid creating an overload situation in other cells, channels and/or BWPs, but instead let the UE stay in the cell.

In yet another case, additional counters and timers defined for LBT failures may be configured differently for different services of different QoS requirements, such as priority, criticalness, latency, CCA type, or similar. In this way, services with e.g. higher priority and/or critical requirements may trigger a recovery and/or a switch procedure earlier than services with lower priority and/or non-critical requirements.

E.g. parallel to the normal out of synch or in synch (OOS/IS) counters and timers that triggers RLF, embodiments here may disclose addition of counters and timers for each LBT type or priority or each QoS class that takes the channel access requirements into account. For example: if a number of N consecutive channel access failures occur, start a timer T. While the timer T is running, if a number M of consecutive successes to access the channel occur, then stop and reset the timer T. When the timer T expires, the UE may declare RLF.

These additional counters and timers capture channel access problems and allow configurable triggering of RLF that may be special for e.g. the unlicensed channel.

Other variants of mechanisms for RLF triggering based on CCA failure counting are also described in the detailed description below, including leaky bucket-based approaches for counting LBT failures.

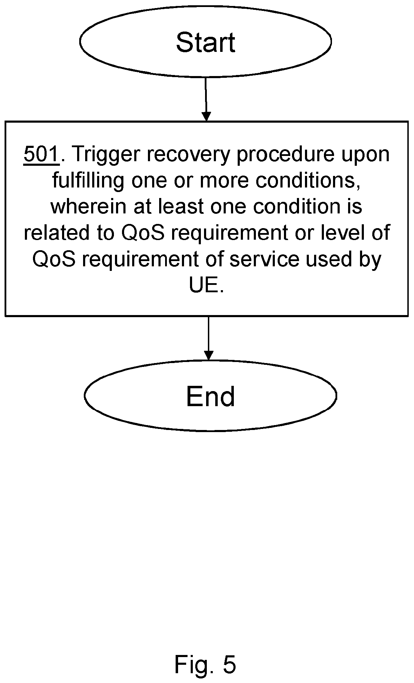

The method action performed by the UE 10 for handling communication, e.g. handle or manage recovery procedures such as detection of RLFs, in an efficient manner in the wireless communication network 1, e.g. using unlicensed spectrum, according to embodiments herein will now be described with reference to a flowchart depicted in **Fig. 5**. The wireless communication network 1 comprises the UE 10 and the radio network node 12.

**Action 501.** The UE triggers a recovery procedure upon fulfilling one or more conditions. At least one condition of the one or more conditions is related to a quality of service (QoS) requirement or a level of QoS requirement of a service used by the UE 10. The at least one condition may comprise a time condition for triggering a recovery procedure that is related to whether the service used by the UE is critically or not. E.g. a time condition for triggering a RLF, such as when to trigger a RLF, is related to whether QoS requirement is e.g. critical or non-critical of the service used by the UE 10. The at least one condition comprises an access condition for triggering a recovery procedure, which access condition is based on one or more counters or timers related to channel access failure and, the QoS requirement or the level of QoS requirement of the service used by the UE 10. Additionally or alternatively, one condition may be an access condition for triggering a RLF which may be based on one or more counters or timers related to channel access failure and to the QoS requirement or the level of QoS requirement of the service used by the UE 10. The one or more counters and timers may be defined for channel access failures, and which one or more counters and timers may be configured differently for different levels of QoS requirements of services. E.g. the counters and timers may be defined for CCA failures, which counters and timers may be configured differently for different QoS requirements of services. The access condition comprises channel access failures, or a number of channel access failures, related to UL transmissions, and wherein the access condition may comprise a counter value that is associated with configured priority levels of different channel access methods. The access condition may define a number of channel access failures per a time unit for triggering the recovery procedure. The recovery procedure may comprise one or more of the following: RLF recovery; switch to other bandwidth part, channel, subband, cell, or carrier; a handover; or, for a secondary cell (SCell), a secondary cell group (SCG) RLF report mechanism. The QoS requirement may comprise that depending on a priority of a transmission, wherein transmissions are of different priorities, the recovery procedure is treated differently. The priority may be an UL priority level; wherein the UL priority level comprises any of the following: a logical channel to which a certain QoS flow or radio bearer is associated; a logical channel priority to which a certain QoS flow or radio bearer is associated; a logical channel group, LCG, to which one or more logical channels are associated to; a channel access priority class to which one or more logical channels are associated or to which physical channels are associated, or to which L1 control signalling are associated; and a reason or a type of random access. Thus, the condition may be related to data or priority such as a channel access priority class that the UE uses to transmit the UL signal. The channel access priority class may be related to QoS in case of UL data transmission, but it may also be related to the specific UL signal transmitted, e.g. RACH/SR/HARQ feedback/RRC also associated with a QoS. With an UL priority level, intended for any of the following: The logical channel to which a certain QoS flow/radio bearer is associated; The logical channel priority to which a certain QoS flow/radio bearer is associated; The LCG to which one or more logical channels are associated to; The channel access priority class to which one or more logical channels are associated or to which physical channels, such as PUSCH, PUCCH, PRACH, are associated, or to which L1 control signalling such as UCI or SRS are associated; Type of Random Access, i.e. for differentiated Random Access when either of *powerRampingStepHighPriority* or *scalingFactorBI* is used or depending on the reason or type of random access (contention free or contention based).

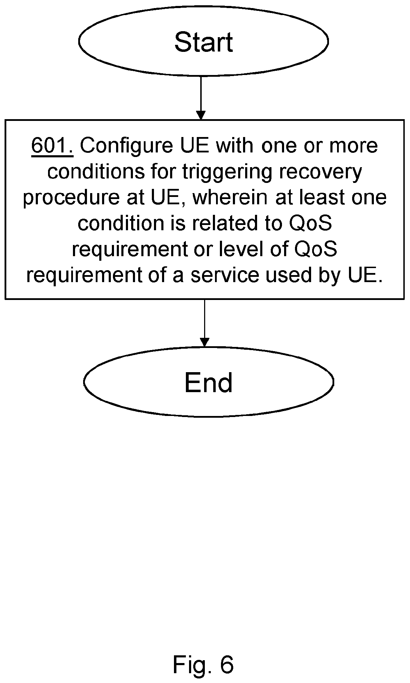

The method actions performed by the radio network node 12 for handling communication of the UE 10, such as managing or configuring a recovery procedure at the UE 10, in the wireless communication network 1 according to embodiments herein will now be described with reference to a flowchart depicted in **Fig. 6****.** The wireless communication network 1 comprises the UE 10 and the radio network node 12.

**Action 601**. The radio network node configures the UE 10 with one or more conditions for triggering the recovery procedure at the UE 10. At least one condition of the one or more conditions is related to the QoS requirement or the level of QoS requirement of the service used by the UE 10. The at least one condition may be configured per UE, service, LCH, LCH priority, channel access class and/or other QoS identifying information. The at least one condition may comprise the time condition for triggering the recovery procedure that is related to whether the service used by the UE is critically or not. The at least one condition comprises the access condition for triggering the recovery procedure, which access condition is based on the one or more counters or timers related to channel access failure and, the QoS requirement or the level of QoS requirement of the service used by the UE. The one or more counters and timers may be defined for channel access failures, and the one or more counters and timers may be configured differently for different levels of QoS requirements of services. The access condition comprises channel access failures related to UL transmissions, and wherein the access condition may comprise the counter value that is associated with configured priority levels of different channel access methods. The access condition may define the number of channel access failures per a time unit for triggering the recovery procedure. The recovery procedure may comprise one or more of the following: RLF recovery; switch to other bandwidth part, channel, subband, cell, or carrier; a handover; or, for a SCell, a SCG RLF report mechanism. The QoS requirement may comprise that depending on the priority of the transmission, wherein transmissions are of different priorities, the recovery procedure should be treated differently. The priority may be the UL priority level; wherein the UL priority level comprises any of the following: - a logical channel to which a certain QoS flow or radio bearer is associated; - a logical channel priority to which a certain QoS flow or radio bearer is associated; - a logical channel group, LCG, to which one or more logical channels are associated to; - a channel access priority class to which one or more logical channels are associated or to which physical channels are associated, or to which L1 control signalling are associated; and - a reason or a type of random access.

The below examples are described in the context of NR unlicensed spectrum (NR-U). The examples are not limited to NR-U scenarios. They are also applicable to other unlicensed operation scenarios such as LTE LAA/eLAA/feLAA or WiFi. The recovery procedure such as RLF/RLM/beam management triggering of NR is generalized due to weak link detection and a parallel detection of RLF is introduced due to not detecting any reference signals and/or not being able to access the uplink channel, e.g. (as a typical example) due to CCA failure, with differentiation depending on the QoS and/or LBT type or priority. Embodiments herein may be summarized as below
1) The intention of the embodiments herein is to prioritize UEs with more critical QoS requirements upon occurrence of consecutive LBT failures, not excluding cases with some LBT successes in between failures. The priorities of data, the data that triggers the random access (RA) for obtaining a grant, may be based on the LCH priority of the LCH containing data. The other identifiers, like a radio bearer ID, a logical channel group ID, or session or flow ID, e.g., 5G QoS Identifier (5QI), or QoS flow ID (QFI) in NR network, while QoS class identifier (QCI) in LTE network, may also be applied. The information on channel access priority class may also be applicable here.
2) Other variants of mechanisms for RLF triggering based on CCA failure counting are also described in the detailed description, including leaky bucket-based approaches. Counting may be related to QoS requirement of the service.
3) The mechanisms may be configured per UE/service/LCH/LCH priority/channel access class or other QoS/service identifying information.

Note: in the below embodiments, as an example, channel access priority class (CAPC), p to represent the service priority is used. Other service or QoS identifiers as mentioned above may be equally applicable.

As the interference may look different at a radio network node and at a UE, RLF evaluations may be done locally, but information about situation at some other location may also be useful. If uplink and downlink share the same frequency spectrum, it may be useful to use measurements from both uplink and downlink when evaluating the radio link's suitability and assess possible RLF declaration.

In the following step descriptions, the generic term "failure to access a wireless channel" or "LBT failure" may be used. CCA failure is the type of channel access failure that primarily is intended, but since the solution may be more generally applicable, it is appropriate to use the more general term "failure to access a wireless channel" or "channel access failure", implying that the solution would work with any type of channel access failure.

In the following when mentioning the generic term "cell" this may include cells as indicated by the physical cell identity (PCI), or the combined PCI and public land mobile network (PLMN) identity, or combinations of PCI and carrier frequency, or combined carrier frequency, PCI and PLMN identity.

UL channel access failure monitoring.

The uplink may be considered as the first example.

In this first example a scenario where the UE 10 cannot deliver a UL transmission, due for example to failure to access a wireless channel, may be considered. In the following for UL transmission may be intended any UL transmission on PUSCH, PUCCH, PRACH, SRS, or any other channel that exist or may be defined for uplink transmissions.

In uplink, said UL transmissions may be of different priority, which is a QoS requirement, and therefore depending on the priority of the specific transmissions the event of "failure to access a wireless channel" should be treated differently. For example, if after a certain number of "failure to access a wireless channel" the UE triggers e.g. RLF, the UE may monitor the events of "failure to access a wireless channel" separately for each UL priority level or for separate sets of UL priority levels. With an UL priority level, it may be intended any of the following:
- The logical channel to which a certain QoS flow/radio bearer is associated;
- The logical channel priority to which a certain QoS flow/radio bearer is associated;
- The LCG to which one or more logical channels are associated to;
- The channel access priority class to which one or more logical channels are associated or to which physical channels, such as PUSCH, PUCCH and PRACH, are associated, or to which L1 control signalling such as UCI or SRS are associated;
- Type of Random Access, i.e. for differentiated Random Access when either of powerRampingStepHighPriority or scalingFactorBI is used or depending on the reason or type of random access (contention free or contention based).

The proposed steps below may, for example, be done by a UE for each cell, or for each Special Cell (SpCell), as defined in 38.331 v.15.0.0.

**A first step.** In a first step, the UE 10 may count any failure to access a wireless channel.

When a certain number of consecutive, or possibly non-consecutive, failures to access the wireless channel have been reached, RLF may be declared or a timer for delayed RLF declaration may be started, and RLF is declared if it expires.

Events, such as a number of consecutive, or possibly non-consecutive, successful wireless channel accesses, during the counting may reset the access failure counter. In one example, a single successful wireless channel access attempt, such as a successful CCA, may be enough to trigger reset of the failure counter.

If delayed RLF declaration is used, events such as a number of consecutive, or possibly non-consecutive, successful wireless channel accesses may stop, and reset, the timer for RLF declaration and reset access failure counter. In one example, a single successful wireless channel access attempt, such as a successful CCA, is enough to trigger that the RLF timer is stopped and reset and that the failure counter is reset.

**A second step.** In a second step, the UE 10 may have a prioritized list of different channel access methods, e.g. access priorities or access priority classes, and may monitor the failures to access a wireless channel per access priority or access priority class. This step is similar to the one described above but performed related to QoS requirement such as per priority level, where for priority level it is intended any of the priority levels disclosed in the first example. The radio network node 12 may configure the UE 10 with a list of priority levels, so that the UE 10 only monitors the channel access failures related to the UL transmissions which are associated to any of the configured priority levels. Therefore, in this second step, the UE 10 may perform a channel access failure monitoring separately for each priority level or separately for different sets of priority levels.

The said monitoring activity may imply that the UE 10 performs, for each priority level, one or more of the following monitoring procedures:
1. The UE counts the event of channel access failure by stepping a counter;
2. The UE counts the event of channel access failure by starting a timer when a first channel access attempt fails and stopping the timer when a channel access attempt succeeds. The timer for example may be configured shorter for priority levels associated to traffics with stringent latency requirements, and longer for priority levels associated to traffics with more relaxed latency requirements;
3. The UE counts the amount of data, e.g. in bits or bytes, that has been blocked by channel access failures, e.g. within a configurable time window.
4. The UE measures the overall experienced channel occupancy time within a certain time window or the average experience channel occupancy per transmission occasion.

The results of the said monitoring activity may be stored in a UE memory and continuously updated.

The UE 10 may not perform any of said monitoring activity if a channel access failure occurs for an uplink transmission which is associated to a priority level which is not configured for monitoring by the network.

The said monitoring activity may trigger under certain conditions one or more of the following events, where the specific event that is triggered may be different for different priority levels:
- RLF, upon which the UE may trigger RRC Connection Reestablishment for example in a cell different from the cell(s) in which channel access failures have been experienced, e.g. the UE may attempt reestablishment in a licensed cell (this may be achieved by affecting the cell priorities for cell (re)-selection when RLF occurs due to the reasons described above).
- RRC Connection Reestablishment to a cell that may, or may not, have been prepared for the UE in advance by the radio network node (execution of a conditional handover). The RRC Connection Reestablishment Request may indicate that reestablishment is caused by channel access failures or by any of the other measurement the UE performs in the said monitoring activity. In RRC this may be represented with one or more flags indicating the reestablishment cause, e.g. indicating UL channel access failure, and one or more fields indicating the results of the said monitoring activity for one or more of the said priority levels. For example, only the results related to the monitoring activity associated to the priority level which triggered the RRC Connection Reestablishment are indicated.
- Measurement report, upon which for example the UE informs the gNB that the persistent channel access failures have occurred. The measurement report may contain the specific priority level for which the report was triggered, the cell(s), PLMN(s) or BWP(s) in which channel access failures is experienced.
   ∘ The radio network node 12 may then perform handover to another cell, if for example the problematic cell is a PCell, or deactivate the problematic cell(s), or, de-configure or release the problematic cell(s), or de-configure the configured UL grant(s) if that was configured in the problematic cell(s), or, deactivate or release the problematic BWP in the problematic cell.
   ∘ The measurement may also be reported periodically, reporting the results of the said monitoring activity experience in a given time window, e.g. within the time elapsing between this measurement report and the previous measurement report.
- Random access, for example in a cell different from the cell(s) in which channel access failures have been experienced, e.g. the UE 10 may attempt random access in a licensed cell if already configured.
- The UE 10 may stop using the configured UL grant(s) in the problematic cell(s).
- The UE 10 may start a timer which if it expires trigger any of the above events. The timer may be reset if one channel access succeeds, or when a number of channel accesses have succeeded, for the concerned priority level.

The UE 10 may enter the above event whenever one triggering condition is fulfilled for one priority level, whichever comes first. Some of the above events may be also combined. For example, upon triggering RRC Connection Reestablishment procedure, following RLF, the UE may also trigger a measurement report to indicate various parameters related to the said monitoring activity. In this case such measurement report may be included into the RRC Connection Reestablishment Request message, as a separate IE.

Upon triggering any of the above events, the results of the said monitoring activity may be flushed from the UE memory.

In the following, the conditions under which the above events may be triggered are disclosed.

In case the said monitoring activity corresponds to the procedure 1 above, any of the above events may be triggered when a certain maximum configured number of failures to access the channel has been reached for a priority level, e.g. an access priority or access priority class. In one step, a counter for a priority level is stepped by one whenever channel access fails for the UL transmission associated to that priority level. In another step the counter is stepped (incremented) for a channel access failure depending on the access priority (or access priority class) associated with the failed channel access attempt. For instance there are three access priorities (or access priority classes), a failed channel access attempt for the lowest access priority, or access priority class, could step, i.e. increase, the counter by one, while a failed channel access attempt for the middle access priority, or access priority class, could step, i.e. increase, the counter by two and a failed channel access attempt for the highest access priority, or access priority class, could step, i.e. increase, the counter by three. Successful channel access attempts could reset the counter or decrease it with different amounts depending on the access priority, or access priority class, associated with the successful channel access attempt.

Events, such as a number of consecutive, or possibly non-consecutive within a configurable time window, successful wireless channel accesses of the same access priority or access priority class, during the counting may reset the access failure counter of that priority level, e.g. access priority or access priority class, or cancel delayed RLF triggering of that priority level if that is used. The network may configure the minimum amount of consecutive, or possibly non-consecutive within a configurable time window, successful wireless channel accesses before resetting the channel access failure counter. Upon resetting such counter, the UE exits the event among the ones listed above that was triggered. Alternatively, in one example, a single successful, wireless channel access attempt, such as a successful CCA, may be enough to trigger reset of the counter for that access priority or access priority class and exit any of the above events. Upon exiting the concerned event, the UE may signal that to the gNB, this may be done as measurement reporting at a later occasion.

Events, such as a number of consecutive, or possibly non-consecutive, successful wireless channel accesses of the same or lower access priority or access priority class, during the counting may reset the access failure counter of that access priority or access priority class.

As an alternative, events, such as a number of consecutive, or possibly non-consecutive, successful wireless channel accesses of the same or higher priority or priority class, during the counting may reset the access failure counter of that access priority or access priority class.

As an alternative, events, such as a number of consecutive, or possibly non-consecutive, successful wireless channel accesses of any access priority or access priority class, during the counting may reset all the access failure counters for any priority level or for all the priority levels which are configured to trigger the same event among the possible events listed above.

In case the said monitoring activity corresponds to the procedure 2 above, any of the above mentioned events may be triggered when the timer configured by the gNB and started by the UE expires for a priority level, e.g. access priority of access priority class. The procedures described above for the counter in the procedure 1 may be used to start the timer for this priority level or for other priority levels.

In case the said monitoring activity corresponds to the procedure 3 above a maximum buffer threshold may be configured per access priority class, so that any of the above events is triggered when for example the buffer level associated with a specific access priority class has reached a predefined buffer threshold.

In case the said monitoring activity corresponds to the procedure 4 above, a maximum channel occupancy time that may be experienced over a configurable time window, or the maximum average channel occupancy time that may be experienced per transmission occasion is configured per channel access priority class, so that any of the above events is triggered when for example the aggregated/average channel occupancy time associated with a specific access priority class has reached the configured threshold.

**A third step.** In a third step, the UE 10 may have a prioritized list of different channel access methods, e.g. different access priorities or access priority classes, and counts failures to access a wireless channel per access priority or access priority class.

When the sum of failures to access the channel for an access priority or access priority class, plus all failures to access the channel for higher access priorities or access priority classes, reaches a certain number, RLF may be declared or a timer for delayed RLF declaration may be started, and RLF is declared if it expires. In preferred examples of this step, the wireless terminal counts consecutive channel access failures, i.e. without any successful channel access attempts for the concerned access priorities or access priority classes in between.

Events, such as a number of consecutive, or possibly non-consecutive, successful wireless channel accesses of the same priority, during the counting may reset the access failure counter of that access priority. Optionally, this applies also to all or a subset of the higher access priorities or access priority classes, i.e. events, such as a number of consecutive, or possibly non-consecutive, successful wireless channel accesses of the same priority, or priority class, or any of the higher access priorities, or access priority classes, during the counting may reset the access failure counter of that access priority or access priority class. In one example, a single successful wireless channel access attempt, such as a successful CCA, on the same access priority, or access priority class, or, optionally, on the same access priority, or access priority class, or any of the higher access priorities, or access priority classes, may be enough to trigger reset of the counter for that access priority or access priority class.

Events, such as a number of consecutive, or possibly non-consecutive, successful wireless channel accesses of the same or lower priority or priority class, during the counting may reset the access failure counter of that access priority or access priority class.

As an alternative, events, such as a number of consecutive, or possibly non-consecutive successful, wireless channel accesses of the same or higher priority or priority class, during the counting may reset the access failure counter of that access priority or access priority class.

As an alternative, events, such as a number of consecutive, or possibly non-consecutive, successful wireless channel accesses of any priority or access priority class, during the counting may reset all the access failure counters.

If a timer for delayed RLF declaration is used, any of the events described above that reset an access failure counter for an access priority or access priority class may also stop and reset the corresponding delayed RLF declaration timer.

**A fourth step.** In a fourth step, the UE 10 may have has a prioritized list of different channel access methods, e.g. different access priorities or access priority classes, counts failures to access a wireless channel per access priority or access priority class and acts similar to the UE actions of the third step, but with a difference that RLF may be declared or a timer for delayed RLF declaration may be started when the sum of, preferably, but not necessarily, consecutive failures to access the channel for an access priority or access priority class, plus all failures to access the channel for lower access priorities or access priority classes, reaches a certain number.

### Examples:

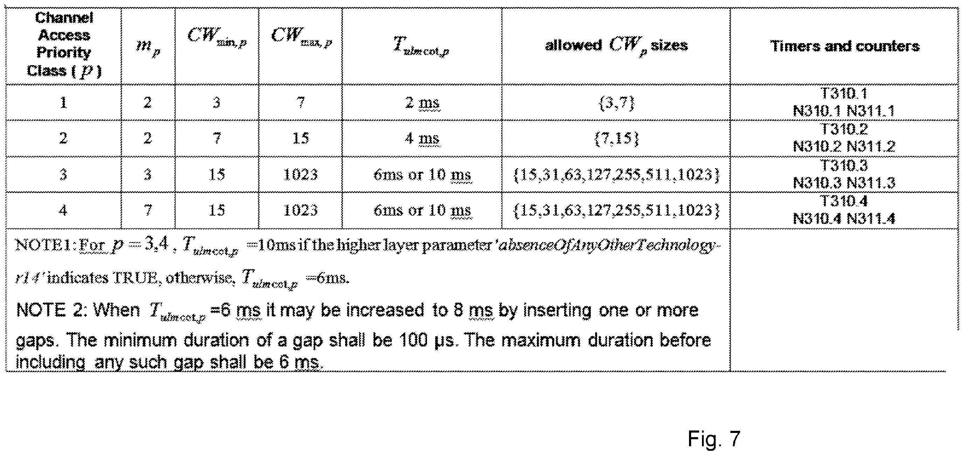

Below follows an example realization in the context of LTE-LAA or NR-U. In LTE-LAA there were four channel access priority classes (CAPCs) and similar is expected to be introduced in NR unlicensed. In one example, it may be introduced for each of them one timer and two counters, see the example in **Fig. 7** from 3GPP TS 37.213 with an extra column to the right, where p indicates priority and a lower numerical value means higher priority, i.e. p = 1 is the highest priority and p = 4 is the lowest priority. Figure 7: Channel Access Priority Class for UL.

The first step to detect RLF is then:
If the UE experiences N310.p consecutive failures to access the channel, as indicated from the physical layer, to transmit data of CAPC p, the timer T310.p is started.

While T310.p is running, if the UE experiences N311.p number of consecutive successes to access the channel to transmit data of CAPC p, then T310.p is stopped and reset.

When T310.p expires, consider RLF to be detected for the cell.

One alternative of the second step may be to count all events with the same or higher priority, or priority class, for triggering RLF and count events on the same or lower priority, or priority class, for cancelling RLF triggering:
If the UE experiences N310.p consecutive failures to access the channel, as indicated from the physical layer, to transmit data of CAPC n, where n ≤ p, the timer T310.p is started.

While T310.p is running, if the UE experiences N311.p number of consecutive successes to access the channel to transmit data of CAPC n, where n ≥ p, then T310. p is stopped and reset.

When T310.p expires, consider RLF to be detected for the cell.

In all of the above examples and steps, a typical channel access attempt, which may fail or succeed, may be a CCA, which is often also referred to as LBT. A failed CCA, or LBT, may mean that the UE assesses the channel to be occupied, i.e. not available for access and/or transmission.

If some type of uplink channel accesses, for example RACH transmissions or PUCCH transmissions, uses other CCA methods, for example deterministic 25 µs LBT, they may be ranked into the same kind of priority order and may be counted and timed as for the CAPCs described above.

**A fifth step.** The above-described steps may be improved by taking the time aspect into account. Mere counting of CCA failures may reach a threshold after a short time, in case of frequent channel access attempts, or after a long time, in case of infrequent channel access attempts. This is in sharp contrast to the regular RLM/RLF mechanisms based on radio channel quality measurements, which are performed at a fixed pace and hence reaches the RLF threshold after a predictable time if the radio channel remains poor.

In the fifth step, to be able to mimic the radio channel quality based RLM/RLF mechanisms, for all counting of failure and success for accessing the wireless channel, it may be used a leaky bucket counting in such a way that a certain number of failures per time unit is needed for triggering actions like RLF or stopping an RLF timer.

For instance, the bucket may leak -1 every nth millisecond, but will never go below 0. Every CCA failure adds 1 to the bucket. Every CCA success may either reduce the bucket content by 1 or reset the bucket content to 0. When the count in the bucket exceeds a threshold, an OOS event, possibly a special OOSCCA_failure event or an excessiveCCA-FailureEvent, is generated. And as long as the bucket count exceeds the threshold, every (consecutive) CCA failure generates another event of the same type. These special OOS indications may be added on the existing counters for OOS or counted separately for triggering RLF or delayed RLF when a threshold is reached, and reseting or stopping timer if IS indications of that type is received.

In a more generic example, the bucket may leak -x every nth millisecond, every CCA failure adds +y to the bucket content and every CCA success reduces the bucket content by -z, or resets the bucket content to 0, but the bucket content is always ≥ 0. When/if the bucket content exceeds a threshold t, an OOS event is generated. The parameters x, y, z, n and t may or may not be configurable.

Variations where e.g. the first in a row of consecutive CCA failures adds a value +y1 to the bucket content, while subsequent consecutive CCA failures each adds another value +y2 to the bucket content, where preferably y1 ≥ y2. Similarly, the first in a row of consecutive CCA successes may reduce the bucket content by a value -z1, while subsequent consecutive CCA successes each may reduce the bucket content by another value -z2, where preferably z1 ≥ z2. Yet other variations may be conceived, e.g. with more than two different bucket content modification values for CCA failures and more than two different bucket content modification values for CCA successes, preferably with largest value being used for the first of a series of consecutive CCA failure/success events, while the other values would be used for the subsequent consecutive events in order of size with the smallest value being used last.

Thus, OOS events, possibly of a special kind for CCA failures, may be generated when CCA failures causes the bucket content to exceed a threshold. But in line with the existing RLM/RLF framework, it should also be possible to generate IS events. For this purpose, it may be good to use two thresholds for the bucket content, t1 and t2, where t1 ≥ t2. When t1 is exceeded, OOS events, possibly special OOS events, e.g. OOSCCA_failure events or "excessiveCCA-FailureEvents", are generated and when the bucket content goes below t2, IS events, possibly special IS events, e.g. ISCCA_success events or "sufficientCCA-SuccessEvents", are generated.

Note that this leaky bucket mechanism, as well as any of the other above described CCA failure counting mechanisms, may be a separate mechanism that "operates" on CCA failures, and CCA successes, independently of radio channel quality based methods, such as OOS/IS event generation and counting. With this approach, the OOS/IS events generated by the CCA failure/success counting, e.g. leaky bucket, mechanism would be different from the ones generated by the radio channel quality based RLM/RLF mechanisms, e.g. using events denoted OOSCCA_failure events or excessiveCCA-FailureEvents and ISCCA_success events or sufficientCCA-SuccessEvents.

The CCA failure/success counting, e.g. leaky bucket, mechanism may also be incorporated with the radio channel quality based RLM/RLF method, forming a generic framework, with the common means being OOS/IS generation and counting. If this integrated approach is used, it may be preferable to let the CCA failure/success counting, e.g. leaky bucket, mechanism generate the same kind of OOS/IS events as the radio channel quality based RLM/RLF mechanism and they would be counted together at the higher layer(s) receiving the generated events.

To moderate the impact of radio channel quality measurements vs. CCA failure/success counting, e.g. leaky bucket-based, different numbers of OSS/IS events may be generated depending on the cause of the generation, e.g. generating two OSS events for every CCA failure, above the bucket threshold t1. It would also be possible to let the channel quality based mechanism generate different numbers of OSS/IS events, e.g. based on how poor the radio channel quality is, e.g. generating one OSS event when the radio channel quality is below a threshold TA, but generating two OSS events when the radio channel quality is below a second threshold TB, where TB < TA.

An integrated approach may also use different types of OOS/IS events for radio channel quality based triggers and CCA failure/success triggers, but the different types of events would be considered together, e.g. through simple summation or some more elaborate algorithm, at the higher layer(s) receiving the generated events.

Other measures to count.

Further it may be used channel occupancy (CO) measurements as a basis for stepping a counter for CO RLF, or any of the counters described above. For example, if CO exceeds a threshold for a period, or for a defined measurement period, then an OOS is generated or a counter for channel access failure is stepped or a CO RLF counter is stepped. An advantage of CO based RLF triggering is that CO may be measured regardless of if the UE has any data to send or not or measurement may be cheap as in being side information when doing other type of measurements, for example when measuring the SSBs, the channel occupancy as directly related to the time from the start of a SMTC window may be estimated until the SSB is transmitted, see further below.

Configuration and combination.

In all the above described examples with differentiation of different channel access priorities, e.g. channel access priority classes, priorities/classes and their different treatments, separately and together, may be configurable, e.g. via the system information or via dedicated RRC signalling, or may be specified fixed in the standard. Partial standardization and partial configurability are also possible. For instance, the standard may allow either of the above four steps, while configuration would be used to indicate which one of the four steps that should be used.

The mapping between access priority, or access priority class, and values to increase and/or decrease the counter may be fixed in a standard or configurable, e.g. via the system information or dedicated RRC signalling.

Combinations of any of the above steps are possible. For example, the integration of new RLM/RLF measures into the existing RLM/RLF framework in step five may be useful also for the other steps.

Joint UL/DL channel access failure monitoring at UE side.

Joining uplink and downlink measures at the UE 10 to improve RLF declaration may be considered as another example.

Any trigger for DL RLM/RLF counting may be considered for inclusion in the UL measures, for example the UL RLF counters may be stepped when events for stepping DL RLF counters occur. This implies that the DL transmissions may be categorized into priority order, or priority classes, depending on the type of DL transmission or DL event that is used as a basis.

As described above for the uplink, the CCA failure/success counting mechanism, e.g. leaky bucket-based, may be separate from or integrated with the regular radio channel quality based RLM/RLF mechanism.

Bandwidth part handling.

As an additional example, for any above example, the similar mechanism may also be applicable for the UE to trigger the recovery procedure such as a BWP switch. In a typical scenario, a UE is configured with multiple BWPs, however, there is only one active at a time. If the monitoring of LBT failures as discussed in any above example is fulfilled in the current active BWP, the UE may trigger a request to its serving radio network node 12 on BWP switch. In this case, the UE 10 may not need to trigger a RLF recovery procedure. The request message shall carry at least one of below information
1) the reason why the UE is preferring to switch to a new BWP,
2) the index of the new BWP

The request message may be transmitted on another BWP, which is different than the current active BWP. Upon reception of the request from this UE, its serving radio network node 12 may decide if the UE 10 shall switch to other BWP. The radio network node may accept or decline the request. The radio network node 12 may also be possible to order the UE to switch to a different BWP than the UE has requested.

As an additional example, for any above example, the similar mechanism is also applicable for the UE 10 to trigger a channel or subband switch if there are multiple channels/sub-bands configured for a UE. If the monitoring of LBT failures as discussed in any above example is fulfilled in the current active channel/sub-band, the UE may trigger a request to its serving radio network node on channel/subband switch. The request message may be transmitted on another channel/sub-band, which is different than the current active channel/subband.

As an additional example, for any above example, the similar mechanism is also applicable for the UE to trigger a carrier/SCell switch in case the UE is configured with multiple serving cells in CA scenarios. If the monitoring of LBT failures as discussed in any above example is fulfilled in a carrier/secondary serving cell, the UE may trigger a request to its serving radio network node to switch this carrier/secondary serving cell to other carriers/cells since those carriers/cells may have lower congestion. The request message may be transmitted on another carrier/cell, which is different than the one that has detected LBT failures. Upon reception of the request, its serving radio network node may decide to accept or decline the request. In another example, the serving radio network node 12 may decide to release this serving cell for this UE 10.

As an additional example, for any above example, the similar mechanism is also applicable for the UE to trigger a recovery procedure such as a handover in case the UE is configured with multiple connectivity such as a DC scenario. In one example, the UE has detected LBT failures in secondary cell group SCG, the UE may send a message to its master cell group MCG radio network node for a handover. Upon reception of the message, its serving radio network node in MCG may decide or decline to change its PSCell, the message may reuse the existing SCG RLF report.

Similar steps to monitor CCA failures may be used to select which BWP to use, if UEs may handle multiple active BWPs.

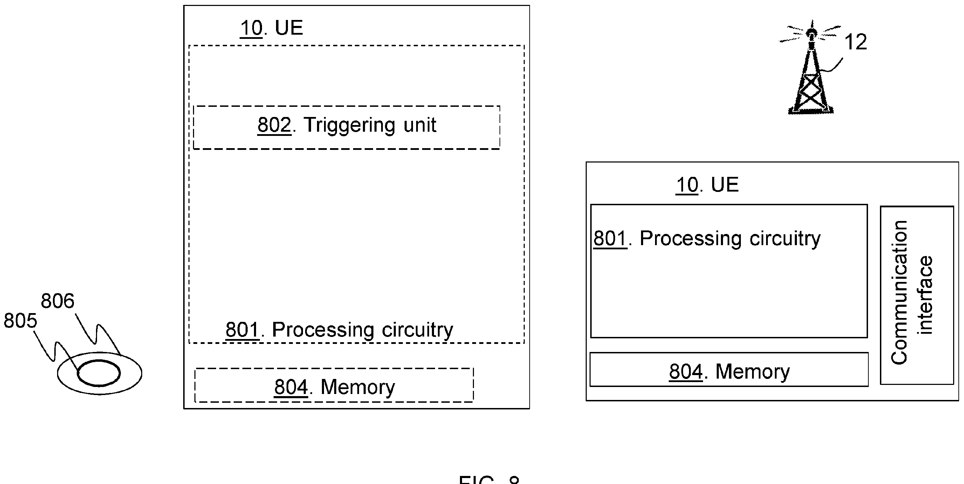

**Fig. 8** is a block diagram depicting the UE 10, for handling communication in the wireless communication network 1 according to embodiments herein.

The UE 10 may comprise **processing circuitry 801**, e.g. one or more processors, configured to perform the methods herein.

The UE 10 may comprise **a triggering unit 802**. The UE 10, the processing circuitry 801, and/or the triggering unit 802 is configured to trigger a recovery procedure upon fulfilling one or more conditions, wherein at least one condition of the one or more conditions is adapted or related to the QoS requirement or the level of QoS requirement of the service used by the UE 10. The at least one condition may comprise a time condition for triggering the recovery procedure that is related to whether the service used by the UE is critically or not. The at least one condition comprises the access condition for triggering the recovery procedure, which access condition is based on the one or more counters or timers related to channel access failure and, the QoS requirement or the level of QoS requirement of the service used by the UE. The one or more counters and timers may be defined for channel access failures, and which one or more counters and timers may be configured differently for different levels of QoS requirements of services. The access condition comprises channel access failures related to UL transmissions, and the access condition comprises the counter value that is associated with configured priority levels of different channel access methods. The access condition may define the number of channel access failures per a time unit for triggering the recovery procedure. The recovery procedure may comprise one or more of the following: radio link failure, RLF, recovery; switch to other bandwidth part, channel, subband, cell, or carrier; a handover; or, for a secondary cell, SCell, a SCG RLF report mechanism. The QoS requirement may comprise that depending on a priority of a transmission, wherein transmissions are of different priorities, the recovery procedure should be treated differently. The priority may be an UL priority level; wherein the UL priority level comprises any of the following:
- a logical channel to which a certain QoS flow or radio bearer is associated;
- a logical channel priority to which a certain QoS flow or radio bearer is associated;
- a logical channel group, LCG, to which one or more logical channels are associated to;
- a channel access priority class to which one or more logical channels are associated or to which physical channels are associated, or to which L1 control signalling are associated; and
- a reason or a type of random access.

The UE 10 further comprises **a memory 804.** The memory 804 comprises one or more units to be used to store data on, such as data packets, events and applications to perform the methods disclosed herein when being executed, and similar. Furthermore, the UE 10 may comprise a communication interface such as comprising a transmitter, a receiver and/or a transceiver.

The methods according to the embodiments described herein for the UE 10 are respectively implemented by means of e.g. **a computer program product 805** or a computer program, comprising instructions, i.e., software code portions, which, when executed on at least one processor, cause the at least one processor to carry out the actions described herein, as performed by the UE 10. The computer program product 805 may be stored on **a computer-readable storage medium 806,** e.g. a disc, a universal serial bus (USB) stick or similar. The computer-readable storage medium 806, having stored thereon the computer program product, may comprise the instructions which, when executed on at least one processor, cause the at least one processor to carry out the actions described herein, as performed by the UE 10. In some embodiments, the computer-readable storage medium may be a transitory or a non-transitory computer-readable storage medium. Thus, embodiments herein may disclose a UE for handling communication in a wireless communication network, wherein the UE comprises processing circuitry and a memory, said memory comprising instructions executable by said processing circuitry whereby said UE is operative to to perform any of the methods herein.

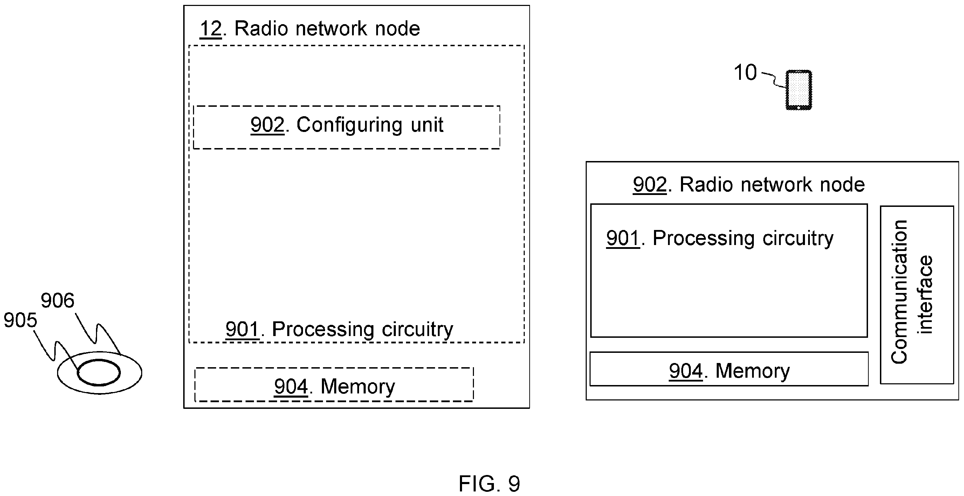

**Fig. 9** is a block diagram depicting the radio network node 12 for handling communication in the wireless communication network 1 according to embodiments herein.

The radio network node 12 may comprise **processing circuitry 901**, e.g. one or more processors, configured to perform the methods herein.

The radio network node 12 may comprise **a configuring unit 902**. The radio network node 12, the processing circuitry 901, and/or the configuring unit 902 is configured to configure the UE 10 with one or more conditions for triggering a recovery procedure at the UE 10, wherein at least one condition of the one or more conditions is adapted or related to the QoS requirement or the level of QoS requirement of the service used by the UE 10. The at least one condition may be configured per UE, service, logical channel, LCH, LCH priority, channel access class and/or other QoS identifying information. The at least one condition may comprise a time condition for triggering the recovery procedure that is related to whether the service used by the UE is critically or not. The at least one condition comprises an access condition for triggering the recovery procedure, which access condition is based on one or more counters or timers related to channel access failure and, the QoS requirement or the level of QoS requirement of the service used by the UE. The one or more counters and timers may be defined for channel access failures, and which one or more counters and timers may be configured differently for different levels of QoS requirements of services. The access condition comprises channel access failures related to UL transmissions, and wherein the access condition comprise the counter value that is associated with configured priority levels of different channel access methods. The access condition may define the number of channel access failures per time unit for triggering the recovery procedure. The recovery procedure may comprise one or more of the following: RLF recovery; switch to other bandwidth part, channel, subband, cell, or carrier; a handover; or, for a secondary cell, SCell, a SCG RLF report mechanism. The QoS requirement may comprise that depending on the priority of a transmission, wherein transmissions are of different priorities, the recovery procedure should be treated differently. The priority may be an UL priority level; wherein the UL priority level comprises any of the following:
- a logical channel to which a certain QoS flow or radio bearer is associated;
- a logical channel priority to which a certain QoS flow or radio bearer is associated;
- a logical channel group, LCG, to which one or more logical channels are associated to;
- a channel access priority class to which one or more logical channels are associated or to which physical channels are associated, or to which L1 control signalling are associated; and
- a reason or a type of random access.

The radio network node 12 further comprises **a memory 904**. The memory 904 comprises one or more units to be used to store data on, such as data packets, events and applications to perform the methods disclosed herein when being executed, and similar. Furthermore, the radio network node 12 may comprise a communication interface such as comprising a transmitter, a receiver and/or a transceiver.

The methods according to the embodiments described herein for the radio network node 12 are respectively implemented by means of e.g. **a computer program product 905** or a computer program, comprising instructions, i.e., software code portions, which, when executed on at least one processor, cause the at least one processor to carry out the actions described herein, as performed by the radio network node 12. The computer program product 905 may be stored on **a computer-readable storage medium 906,** e.g. a disc, a universal serial bus (USB) stick or similar. The computer-readable storage medium 906, having stored thereon the computer program product, may comprise the instructions which, when executed on at least one processor, cause the at least one processor to carry out the actions described herein, as performed by the radio network node 12. In some embodiments, the computer-readable storage medium may be a transitory or a non-transitory computer-readable storage medium. Thus, embodiments herein may disclose a radio network node for handling communication in a wireless communication network, wherein the radio network node 12 comprises processing circuitry and a memory, said memory comprising instructions executable by said processing circuitry whereby said radio network node 12 is operative to to perform any of the methods herein.

In some embodiments a more general term "radio network node" is used and it can correspond to any type of radio-network node or any network node, which communicates with a wireless device and/or with another network node. Examples of network nodes are NodeB, MeNB, SeNB, a network node belonging to Master cell group (MCG) or Secondary cell group (SCG), base station (BS), multi-standard radio (MSR) radio node such as MSR BS, eNodeB, network controller, radio-network controller (RNC), base station controller (BSC), relay, donor node controlling relay, base transceiver station (BTS), access point (AP), transmission points, transmission nodes, Remote radio Unit (RRU), Remote Radio Head (RRH), nodes in distributed antenna system (DAS), etc.

In some embodiments the non-limiting term wireless device or user equipment (UE) is used and it refers to any type of wireless device communicating with a network node and/or with another wireless device in a cellular or mobile communication system. Examples of UE are target device, device to device (D2D) UE, proximity capable UE (aka ProSe UE), machine type UE or UE capable of machine to machine (M2M) communication, Tablet, mobile terminals, smart phone, laptop embedded equipped (LEE), laptop mounted equipment (LME), USB dongles etc.

Embodiments are applicable to any RAT or multi-RAT systems, where the wireless device receives and/or transmit signals (e.g. data) e.g. New Radio (NR), Wi-Fi, Long Term Evolution (LTE), LTE-Advanced, Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations.

As will be readily understood by those familiar with communications design, that functions means or circuits may be implemented using digital logic and/or one or more microcontrollers, microprocessors, or other digital hardware. In some embodiments, several or all of the various functions may be implemented together, such as in a single application-specific integrated circuit (ASIC), or in two or more separate devices with appropriate hardware and/or software interfaces between them. Several of the functions may be implemented on a processor shared with other functional components of a wireless device or network node, for example.

Alternatively, several of the functional elements of the processing means discussed may be provided through the use of dedicated hardware, while others are provided with hardware for executing software, in association with the appropriate software or firmware. Thus, the term "processor" or "controller" as used herein does not exclusively refer to hardware capable of executing software and may implicitly include, without limitation, digital signal processor (DSP) hardware and/or program or application data. Other hardware, conventional and/or custom, may also be included. Designers of communications devices will appreciate the cost, performance, and maintenance trade-offs inherent in these design choices.

Over-the-top (OTT).

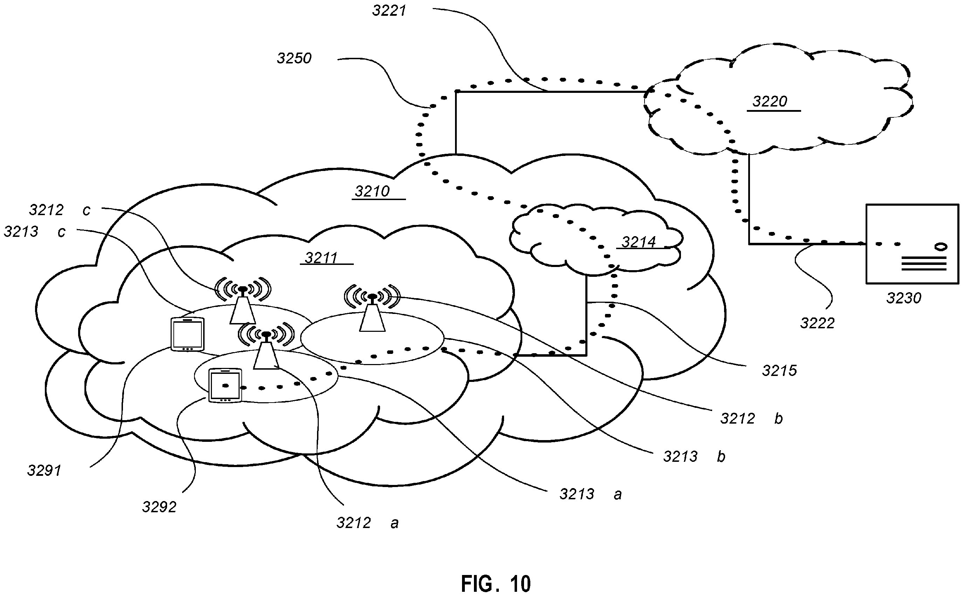

**Fig. 10** shows a Telecommunication network connected via an intermediate network to a host computer in accordance with some embodiments. With reference to Fig. 10, in accordance with an embodiment, a communication system includes telecommunication network 3210, such as a 3GPP-type cellular network, which comprises access network 3211, such as a radio access network, and core network 3214. Access network 3211 comprises a plurality of base stations 3212a, 3212b, 3212c, such as NBs, eNBs, gNBs or other types of wireless access points being examples of the radio network node 12 above, each defining a corresponding coverage area 3213a, 3213b, 3213c. Each base station 3212a, 3212b, 3212c is connectable to core network 3214 over a wired or wireless connection 3215. A first UE 3291 located in coverage area 3213c is configured to wirelessly connect to, or be paged by, the corresponding base station 3212c. A second UE 3292 in coverage area 3213a is wirelessly connectable to the corresponding base station 3212a. While a plurality of UEs 3291, 3292 are illustrated in this example being examples of the wireless device 10 above, the disclosed embodiments are equally applicable to a situation where a sole UE is in the coverage area or where a sole UE is connecting to the corresponding base station 3212.

Telecommunication network 3210 is itself connected to host computer 3230, which may be embodied in the hardware and/or software of a standalone server, a cloudimplemented server, a distributed server or as processing resources in a server farm. Host computer 3230 may be under the ownership or control of a service provider, or may be operated by the service provider or on behalf of the service provider. Connections 3221 and 3222 between telecommunication network 3210 and host computer 3230 may extend directly from core network 3214 to host computer 3230 or may go via an optional intermediate network 3220. Intermediate network 3220 may be one of, or a combination of more than one of, a public, private or hosted network; intermediate network 3220, if any, may be a backbone network or the Internet; in particular, intermediate network 3220 may comprise two or more sub-networks (not shown).

The communication system of Figure 10 as a whole enables connectivity between the connected UEs 3291, 3292 and host computer 3230. The connectivity may be described as an over-the-top (OTT) connection 3250. Host computer 3230 and the connected UEs 3291, 3292 are configured to communicate data and/or signalling via OTT connection 3250, using access network 3211, core network 3214, any intermediate network 3220 and possible further infrastructure (not shown) as intermediaries. OTT connection 3250 may be transparent in the sense that the participating communication devices through which OTT connection 3250 passes are unaware of routing of uplink and downlink communications. For example, base station 3212 may not or need not be informed about the past routing of an incoming downlink communication with data originating from host computer 3230 to be forwarded (e.g., handed over) to a connected UE 3291. Similarly, base station 3212 need not be aware of the future routing of an outgoing uplink communication originating from the UE 3291 towards the host computer 3230.

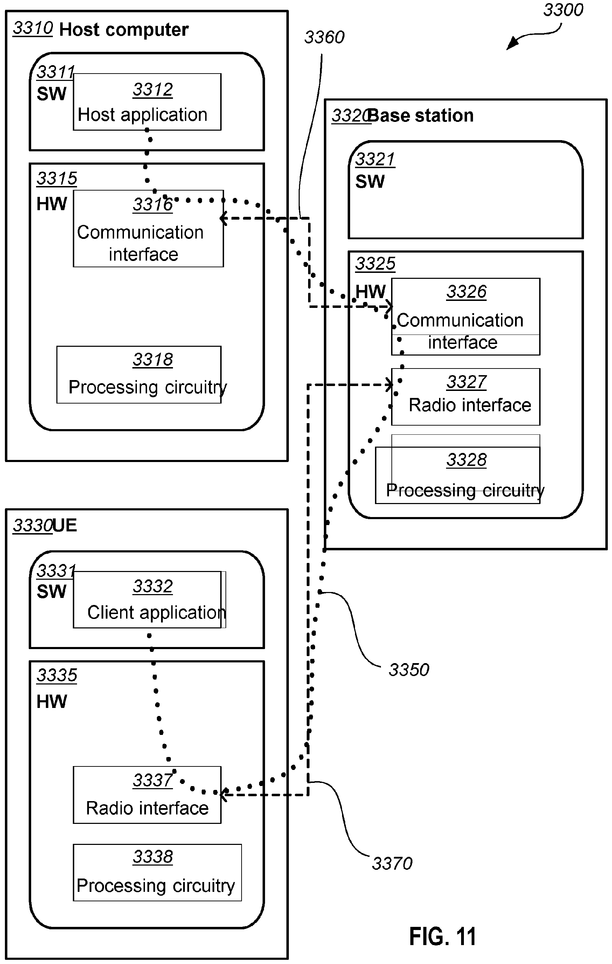

**Fig. 11** shows a host computer communicating via a base station and with a user equipment over a partially wireless connection in accordance with some embodiments

Example implementations, in accordance with an embodiment, of the UE, base station and host computer discussed in the preceding paragraphs will now be described with reference to Fig 11. In communication system 3300, host computer 3310 comprises hardware 3315 including communication interface 3316 configured to set up and maintain a wired or wireless connection with an interface of a different communication device of communication system 3300. Host computer 3310 further comprises processing circuitry 3318, which may have storage and/or processing capabilities. In particular, processing circuitry 3318 may comprise one or more programmable processors, application-specific integrated circuits, field programmable gate arrays or combinations of these (not shown) adapted to execute instructions. Host computer 3310 further comprises software 3311, which is stored in or accessible by host computer 3310 and executable by processing circuitry 3318. Software 3311 includes host application 3312. Host application 3312 may be operable to provide a service to a remote user, such as UE 3330 connecting via OTT connection 3350 terminating at UE 3330 and host computer 3310. In providing the service to the remote user, host application 3312 may provide user data which is transmitted using OTT connection 3350.

Communication system 3300 further includes base station 3320 provided in a telecommunication system and comprising hardware 3325 enabling it to communicate with host computer 3310 and with UE 3330. Hardware 3325 may include communication interface 3326 for setting up and maintaining a wired or wireless connection with an interface of a different communication device of communication system 3300, as well as radio interface 3327 for setting up and maintaining at least wireless connection 3370 with UE 3330 located in a coverage area (not shown in Fig. 11) served by base station 3320. Communication interface 3326 may be configured to facilitate connection 3360 to host computer 3310. Connection 3360 may be direct or it may pass through a core network (not shown in Fig 11) of the telecommunication system and/or through one or more intermediate networks outside the telecommunication system. In the embodiment shown, hardware 3325 of base station 3320 further includes processing circuitry 3328, which may comprise one or more programmable processors, application-specific integrated circuits, field programmable gate arrays or combinations of these (not shown) adapted to execute instructions. Base station 3320 further has software 3321 stored internally or accessible via an external connection.

Communication system 3300 further includes UE 3330 already referred to. It's hardware 3333 may include radio interface 3337 configured to set up and maintain wireless connection 3370 with a base station serving a coverage area in which UE 3330 is currently located. Hardware 3333 of UE 3330 further includes processing circuitry 3338, which may comprise one or more programmable processors, application-specific integrated circuits, field programmable gate arrays or combinations of these (not shown) adapted to execute instructions. UE 3330 further comprises software 3331, which is stored in or accessible by UE 3330 and executable by processing circuitry 3338. Software 3331 includes client application 3332. Client application 3332 may be operable to provide a service to a human or non-human user via UE 3330, with the support of host computer 3310. In host computer 3310, an executing host application 3312 may communicate with the executing client application 3332 via OTT connection 3350 terminating at UE 3330 and host computer 3310. In providing the service to the user, client application 3332 may receive request data from host application 3312 and provide user data in response to the request data. OTT connection 3350 may transfer both the request data and the user data. Client application 3332 may interact with the user to generate the user data that it provides.

It is noted that host computer 3310, base station 3320 and UE 3330 illustrated in Fig. 11 may be similar or identical to host computer 3230, one of base stations 3212a, 3212b, 3212c and one of UEs 3291, 3292 of Fig. 10, respectively. This is to say, the inner workings of these entities may be as shown in Fig. 11 and independently, the surrounding network topology may be that of Fig. 10.

In Fig. 11, OTT connection 3350 has been drawn abstractly to illustrate the communication between host computer 3310 and UE 3330 via base station 3320, without explicit reference to any intermediary devices and the precise routing of messages via these devices. Network infrastructure may determine the routing, which it may be configured to hide from UE 3330 or from the service provider operating host computer 3310, or both. While OTT connection 3350 is active, the network infrastructure may further take decisions by which it dynamically changes the routing (e.g., on the basis of load balancing consideration or reconfiguration of the network).

Wireless connection 3370 between UE 3330 and base station 3320 is in accordance with the teachings of the embodiments described throughout this disclosure. One or more of the various embodiments improve the performance of OTT services provided to UE 3330 using OTT connection 3350, in which wireless connection 3370 forms the last segment. More precisely, the teachings of these embodiments make it possible to detect radio link failures in UEs for unlicensed channel access and enhance existing RLM/RLF/beam management procedures to additionally consider the impact of consecutive LBT failures on QoS. Thereby the data communication, e.g. the handling or managing of data packets may be performed in an efficient manner.

A measurement procedure may be provided for the purpose of monitoring data rate, latency and other factors on which the one or more embodiments improve. There may further be an optional network functionality for reconfiguring OTT connection 3350 between host computer 3310 and UE 3330, in response to variations in the measurement results. The measurement procedure and/or the network functionality for reconfiguring OTT connection 3350 may be implemented in software 3311 and hardware 3315 of host computer 3310 or in software 3331 and hardware 3333 of UE 3330, or both. In embodiments, sensors (not shown) may be deployed in or in association with communication devices through which OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of OTT connection 3350 may include message format, retransmission settings, preferred routing etc.; the reconfiguring need not affect base station 3320, and itmay be unknown or imperceptible to base station 3320. Such procedures and functionalities may be known and practiced in the art. In certain embodiments, measurements may involve proprietary UE signalling facilitating host computer 3310's measurements of throughput, propagation times, latency and the like. The measurements may be implemented in that software 3311 and 3331 causes messages to be transmitted, in particular empty or 'dummy' messages, using OTT connection 3350 while it monitors propagation times, errors etc.

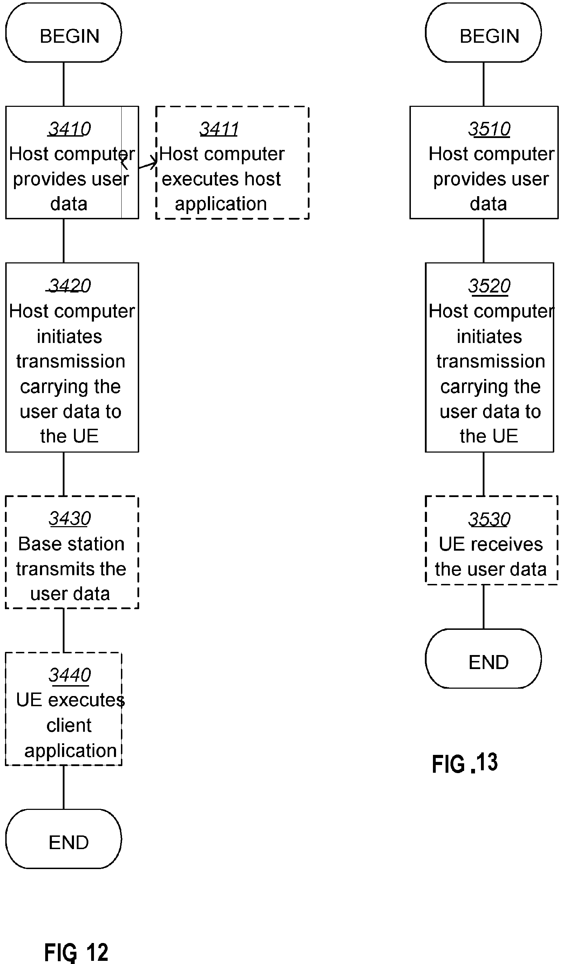

**Fig. 12** shows methods implemented in a communication system including a host computer, a base station and a user equipment in accordance with some embodiments.

Fig. 12 is a flowchart illustrating a method implemented in a communication system, in accordance with one embodiment. The communication system includes a host computer, a base station and a UE which may be those described with reference to Fig. 10 and Fig. 11. For simplicity of the present disclosure, only drawing references to Fig. 12 will be included in this section. In step 3410, the host computer provides user data. In substep 3411 (which may be optional) of step 3410, the host computer provides the user data by executing a host application. In step 3420, the host computer initiates a transmission carrying the user data to the UE. In step 3430 (which may be optional), the base station transmits to the UE the user data which was carried in the transmission that the host computer initiated, in accordance with the teachings of the embodiments described throughout this disclosure. In step 3440 (which may also be optional), the UE executes a client application associated with the host application executed by the host computer.

**Fig. 13** shows methods implemented in a communication system including a host computer, a base station and a user equipment in accordance with some embodiments.

Fig. 13 is a flowchart illustrating a method implemented in a communication system, in accordance with one embodiment. The communication system includes a host computer, a base station and a UE which may be those described with reference to Fig. 10 and Fig. 11. For simplicity of the present disclosure, only drawing references to Fig. 13 will be included in this section. In step 3510 of the method, the host computer provides user data. In an optional substep (not shown) the host computer provides the user data by executing a host application. In step 3520, the host computer initiates a transmission carrying the user data to the UE. The transmission may pass via the base station, in accordance with the teachings of the embodiments described throughout this disclosure. In step 3530 (which may be optional), the UE receives the user data carried in the transmission.

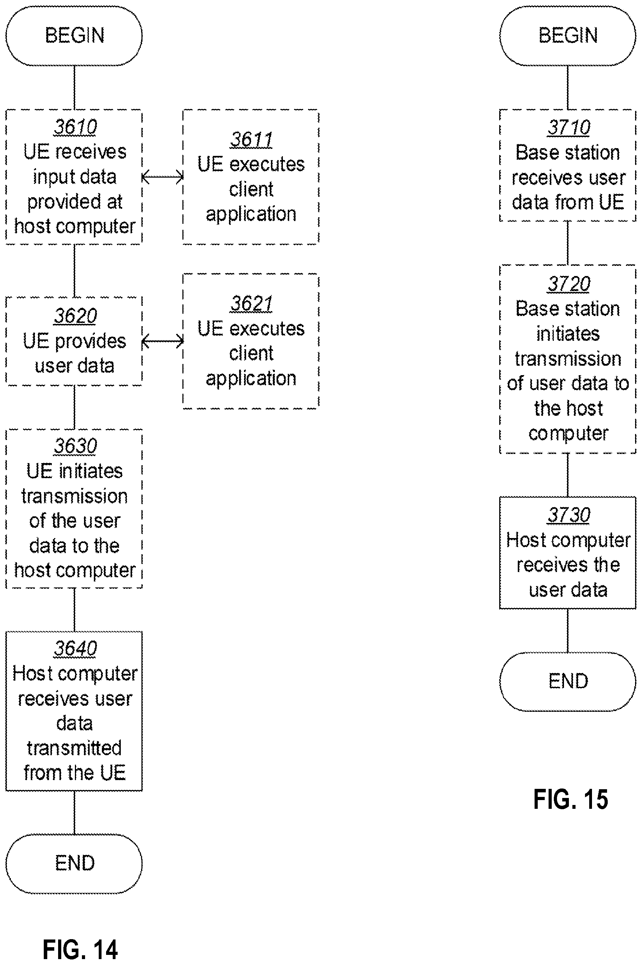

**Fig. 14** shows methods implemented in a communication system including a host computer, a base station and a user equipment in accordance with some embodiments.

Fig. 14 is a flowchart illustrating a method implemented in a communication system, in accordance with one embodiment. The communication system includes a host computer, a base station and a UE which may be those described with reference to Fig. 10 and Fig. 11. For simplicity of the present disclosure, only drawing references to Fig. 14 will be included in this section. In step 3610 (which may be optional), the UE receives input data provided by the host computer. Additionally or alternatively, in step 3620, the UE provides user data. In substep 3621 (which may be optional) of step 3620, the UE provides the user data by executing a client application. In substep 3611 (which may be optional) of step 3610, the UE executes a client application which provides the user data in reaction to the received input data provided by the host computer. In providing the user data, the executed client application may further consider user input received from the user. Regardless of the specific manner in which the user data was provided, the UE initiates, in substep 3630 (which may be optional), transmission of the user data to the host computer. In step 3640 of the method, the host computer receives the user data transmitted from the UE, in accordance with the teachings of the embodiments described throughout this disclosure.

**Fig. 15** show methods implemented in a communication system including a host computer, a base station and a user equipment in accordance with some embodiments.

Fig. 15 is a flowchart illustrating a method implemented in a communication system, in accordance with one embodiment. The communication system includes a host computer, a base station and a UE which may be those described with reference to Fig. 10 and Fig. 11. For simplicity of the present disclosure, only drawing references to Fig. 15 will be included in this section. In step 3710 (which may be optional), in accordance with the teachings of the embodiments described throughout this disclosure, the base station receives user data from the UE. In step 3720 (which may be optional), the base station initiates transmission of the received user data to the host computer. In step 3730 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

It will be appreciated that the foregoing description and the accompanying drawings represent non-limiting examples of the methods and apparatus taught herein. As such, the apparatus and techniques taught herein are not limited by the foregoing description and accompanying drawings. Instead, the embodiments herein are limited only by the following claims .

| Abbreviation | Explanation |
|---|---|
| ACK | (positive) Acknowledgment |
| AUL | Autonomous uplink |
| BLER | Block error rate |
| BWP | Bandwidth Part |
| CAPC | Channel access priority class |
| CBG | Code block group |
| CCA | Clear channel assessment |
| CO | Channel occupancy |
| COT | Channel occupancy time |
| CWS | Contention window size |
| DL | Downlink |
| ED | Energy detection |
| eNB | 4G base station |
| gNB | 5G base station |
| HARQ | Hybrid automatic repeat request |
| is | In synch |
| LAA | Licensed assisted access |
| LBT | Listen before talk |
| MAC | Medium access control |
| MCOT | Maximum channel occupancy time |
| NACK | Negative acknowledgment |
| NDI | New data indicator |
| NR | 3GPP defined 5G radio access technology |
| NR-U | NR unlicensed |
| OOS | out of synch |
| PCell | Primary cell |
| PCI | Physical cell identity |
| PDCCH | A downlink control channel |
| PDU | Protocol data unit |
| PHICH | Physical channel Hybrid ARQ Indicator Channel |
| PLMN | Public land mobile network |
| PSCell | Primary SCG cell |
| PUCCH | Physical Uplink Control Channel |
| PUSCH | Physical Uplink Shared Channel |
| QCI | QoS class identifier |
| QoS | Quality of service |
| RAT | Radio access technology |
| RLF | Radio link failure |
| RLM | Radio link monitoring |
| RLC | Radio link control |
| RRC | Radio resource control |
| RS | Reference signal |
| SCG | Secondary cell group |
| SDU | Service data unit |
| SMTC | SSB-based measurement timing configuration |
| SpCell | Special cell (PCell or PSCell) |
| SPS | Semi persistent scheduling |
| TTI | Transmission time interval |
| UCI | Uplink Control Information |
| UE | User equipment |
| UL | Uplink |

## Claims

1. A method performed by a user equipment, UE, (10) for handling communication in an unlicensed spectrum in a wireless communication network, the method comprising
- triggering (501) a recovery procedure upon fulfilling one or more conditions, wherein at least one condition, of the one or more conditions, is related to a quality of service, QoS, requirement, or a level of a quality of service, QoS, requirement of a service used by the UE,
wherein the at least one condition comprises an access condition for triggering a recovery procedure, which access condition is based on one or more counters or timers related to channel access failure, being clear channel assessment failure, and, the QoS requirement or the level of QoS requirement of the service used by the UE, and
wherein the access condition comprises clear channel assessment failures related to uplink, UL, transmissions, and wherein the access condition comprises a counter value that is associated with configured priority levels of different channel access methods.

2. The method according to claim 1, wherein the at least one condition comprises a time condition for triggering a recovery procedure that is related to whether the service used by the UE is critically or not.

3. The method according to any of the claims 1-2, wherein the one or more counters and timers are defined for channel access failures, and which one or more counters and timers are configured differently for different levels of QoS requirements of services.

4. The method according to any of the claims 1-3, wherein the access condition defines a number of channel access failures per a time unit for triggering the recovery procedure.

5. The method according to any of the claims 1-4, wherein the recovery procedure comprises one or more of the following: radio link failure, RLF, recovery; switch to other bandwidth part, channel, subband, cell, or carrier; a handover; or, for a secondary cell, SCell, a secondary cell group, SCG, RLF report mechanism.

6. The method according to any of the claims 1-5, wherein the QoS requirement comprises that depending on a priority of a transmission, wherein transmissions are of different priorities, the recovery procedure is treated differently.

7. The method according to claim 6, wherein the priority is an uplink, UL, priority level; wherein the UL priority level comprises any of the following:
- a logical channel to which a certain QoS flow or radio bearer is associated;
- a logical channel priority to which a certain QoS flow or radio bearer is associated;
- a logical channel group, LCG, to which one or more logical channels are associated to;
- a channel access priority class to which one or more logical channels are associated or to which physical channels are associated, or to which L1 control signalling are associated; and
- a reason or a type of random access.

8. A method performed by a radio network node (12) for handling communication of a user equipment, UE, in an unlicensed spectrum in a wireless communication network, the method comprising
configuring (601) the UE with one or more conditions for triggering a recovery procedure at the UE, wherein at least one condition, of the one or more conditions, is related to a quality of service, QoS, requirement, or a level of QoS requirement of a service used by the UE,
wherein the at least one condition comprises an access condition for triggering a recovery procedure, which access condition is based on one or more counters or timers related to channel access failure, being clear channel assessment failure, and, the QoS requirement or the level of QoS requirement of the service used by the UE, and
wherein the access condition comprises clear channel assessment failures related to uplink, UL, transmissions, and wherein the access condition comprise a counter value that is associated with configured priority levels of different channel access methods.

9. The method according to claim 8, wherein the at least one condition is configured per UE, service, logical channel, LCH, LCH priority, channel access class and/or other QoS identifying information.

10. The method according to any of the claims 8-9, wherein the at least one condition comprises a time condition for triggering a recovery procedure that is related to whether the service used by the UE is critically or not.

11. The method according to any of the claims 8-10, wherein the one or more counters and timers are defined for channel access failures, and which one or more counters and timers are configured differently for different levels of QoS requirements of services.

12. The method according to any of the claims 8-11, wherein the access condition defines a number of channel access failures per a time unit for triggering the recovery procedure.

13. The method according to any of the claims 8-12, wherein the recovery procedure comprises one or more of the following: radio link failure, RLF, recovery; switch to other bandwidth part, channel, subband, cell, or carrier; a handover; or, for a secondary cell, SCell, a secondary cell group, SCG, RLF report mechanism.

14. The method according to any of the claims 8-13, wherein the QoS requirement comprises that depending on a priority of a transmission, wherein transmissions are of different priorities, the recovery procedure is treated differently.

15. The method according to claim 14, wherein the priority is an uplink, UL, priority level; wherein the UL priority level comprises any of the following:
- a logical channel to which a certain QoS flow or radio bearer is associated;
- a logical channel priority to which a certain QoS flow or radio bearer is associated;
- a logical channel group, LCG, to which one or more logical channels are associated to;
- a channel access priority class to which one or more logical channels are associated or to which physical channels are associated, or to which L1 control signalling are associated; and
- a reason or a type of random access.

16. A user equipment, UE, (10) for handling communication in an unlicensed spectrum in a wireless communication network, wherein the UE is configured to
trigger a recovery procedure upon fulfilling one or more conditions, wherein at least one condition, of the one or more conditions, is related to a quality of service, QoS, requirement, or a level of a quality of service, QoS, requirement of a service used by the UE
whereinthe at least one condition comprises an access condition for triggering a recovery procedure, which access condition is based on one or more counters or timers related to channel access failure, being clear channel assessment failure, and, the QoS requirement or the level of QoS requirement of the service used by the UE, and
wherein the access condition comprises clear channel assessment failures related to uplink, UL, transmissions, and wherein the access condition comprises a counter value that is associated with configured priority levels of different channel access methods.

17. The UE according to claim 16, wherein the at least one condition comprises a time condition for triggering a recovery procedure that is related to whether the service used by the UE is critically or not.

18. The UE according to any of the claims 16-17, wherein the one or more counters and timers are defined for channel access failures, and which one or more counters and timers are configured differently for different levels of QoS requirements of services.

19. A radio network node (12) for handling communication of a user equipment, UE, (10) in an unlicensed spectrum in a wireless communication network, wherein the radio network node is configured to:
configure the UE with one or more conditions for triggering a recovery procedure at the UE (10), wherein at least one condition, of the one or more conditions, is related to a quality of service, QoS, requirement, or a level of QoS requirement of a service used by the UE,
wherein the at least one condition comprises an access condition for triggering a recovery procedure, which access condition is based on one or more counters or timers related to channel access failure, being clear channel assessment failure, and, the QoS requirement or the level of QoS requirement of the service used by the UE, and
wherein the access condition comprises clear channel assessment failures related to uplink, UL, transmissions, and wherein the access condition comprise a counter value that is associated with configured priority levels of different channel access methods.

20. The radio network node (12) according to claim 19, wherein the at least one condition is configured per UE, service, logical channel, LCH, LCH priority, channel access class and/or other QoS identifying information.

21. The radio network node (12) according to any of the claims 19-20, wherein the at least one condition comprises a time condition for triggering a recovery procedure that is related to whether the service used by the UE is critically or not.

22. A computer program product comprising instructions, which, when executed on at least one processor, cause the at least one processor to carry out any of the methods according to claims 1-7 as performed by the UE or claims 8-15 as performed by the radio network node.

## Patentansprüche

1. Verfahren, das von einer Benutzereinrichtung, UE, (10) durchgeführt wird, zur Handhabung von Kommunikation in einem unlizenzierten Spektrum in einem drahtlosen Kommunikationsnetzwerk, wobei das Verfahren umfasst:
- Auslösen (501) einer Wiederherstellungsprozedur bei Erfüllung einer oder mehrerer Bedingungen, wobei mindestens eine Bedingung der einen oder der mehreren Bedingungen mit einer Dienstqualitäts-,QoS-,Anforderung oder einer Stufe einer Dienstqualität-,QoS-,Anforderung eines Dienstes, der von der UE verwendet wird, in Beziehung steht,
wobei die mindestens eine Bedingung eine Zugriffsbedingung zum Auslösen einer Wiederherstellungsprozedur umfasst, wobei die Zugriffsbedingung auf einem oder mehreren Zählern oder Zeitgebern in Bezug auf einen Kanalzugriffsfehler, der ein Kanalfreiheitsbeurteilungsfehler ist, und der QoS-Anforderung oder der Stufe der QoS-Anforderung des von der UE verwendeten Dienstes basiert, und
wobei die Zugriffsbedingung Kanalfreiheitsbeurteilungsfehler in Bezug auf Uplink-,UL-,Übertragungen umfasst, und wobei die Zugriffsbedingung einen Zählerwert umfasst, der mit konfigurierten Prioritätsstufen verschiedener Kanalzugriffsverfahren assoziiert ist.

2. Verfahren nach Anspruch 1, wobei die mindestens eine Bedingung eine Zeitbedingung zum Auslösen einer Wiederherstellungsprozedur umfasst, die damit in Beziehung steht, ob der von der UE verwendete Dienst kritisch ist oder nicht.

3. Verfahren nach einem der Ansprüche 1 bis 2, wobei der eine oder die mehreren Zähler und Zeitgeber für Kanalzugriffsfehler definiert sind, und wobei ein oder mehrere Zähler und Zeitgeber für verschiedene Stufen von QoS-Anforderungen von Diensten unterschiedlich konfiguriert sind.

4. Verfahren nach einem der Ansprüche 1 bis 3, wobei die Zugangsbedingung eine Anzahl von Kanalzugriffsfehlern pro Zeiteinheit zum Auslösen der Wiederherstellungsprozedur definiert.

5. Verfahren nach einem der Ansprüche 1 bis 4, wobei die Wiederherstellungsprozedur eines oder mehrere von Folgenden umfasst: Wiederherstellung nach einem Funkverbindungsfehler, RLF; Wechsel zu anderem Bandbreitenteil, Kanal, Unterband oder Träger oder zu anderer Zelle; Handover; oder RLF-Meldungsmechanismus einer sekundären Zellgruppe, SCG, für eine sekundäre Zelle, SCell.

6. Verfahren nach einem der Ansprüche 1 bis 5, wobei die QoS-Anforderung umfasst, dass die Wiederherstellungsprozedur je nach einer Priorität einer Übertragung anders behandelt wird, wobei Übertragungen verschiedene Prioritäten aufweisen.

7. Verfahren nach Anspruch 6, wobei die Priorität eine Uplink-,UL-,Prioritätsstufe ist; wobei die UL-Prioritätsstufe mindestens eines von Folgenden umfasst:
- einen Logikkanal, dem ein bestimmter QoS-Fluss oder Funkträger zugeordnet ist;
- eine Logikkanalpriorität, der ein bestimmter QoS-Fluss oder Funkträger zugeordnet ist;
- eine Logikkanalgruppe, LCG, der ein oder mehrere Logikkanäle zugeordnet sind;
- eine Kanalzugriffsprioritätsklasse, der ein oder mehrere Logikkanäle zugeordnet sind oder der physikalische Kanäle zugeordnet sind oder der L1-Steuersignalisierung zugeordnet ist; und
- eine Ursache oder einen Typ von Direktzugriff.

8. Verfahren, das von einem Funknetzwerkknoten (12) durchgeführt wird, zur Handhabung von Kommunikation einer Benutzereinrichtung, UE, in einem unlizenzierten Spektrum in einem drahtlosen Kommunikationsnetzwerk, wobei das Verfahren umfasst:
Konfigurieren (601) der UE mit einer oder mehreren Bedingungen zum Auslösen einer Wiederherstellungsprozedur an der UE, wobei mindestens eine Bedingung der einen oder der mehreren Bedingungen mit einer Dienstqualitäts-,QoS-,Anforderung oder einer Stufe einer Dienstqualität-,QoS-,Anforderung eines Dienstes, der von der UE verwendet wird, in Beziehung steht,
wobei die mindestens eine Bedingung eine Zugriffsbedingung zum Auslösen einer Wiederherstellungsprozedur umfasst, wobei die Zugriffsbedingung auf einem oder mehreren Zählern oder Zeitgebern in Bezug auf einen Kanalzugriffsfehler, der ein Kanalfreiheitsbeurteilungsfehler ist, und der QoS-Anforderung oder der Stufe der QoS-Anforderung des von der UE verwendeten Dienstes basiert, und
wobei die Zugriffsbedingung Kanalfreiheitsbeurteilungsfehler in Bezug auf Uplink-,UL-,Übertragungen umfasst, und wobei die Zugriffsbedingung einen Zählerwert umfasst, der mit konfigurierten Prioritätsstufen verschiedener Kanalzugriffsverfahren assoziiert ist.

9. Verfahren nach Anspruch 8, wobei die mindestens eine Bedingung pro UE, Dienst, Logikkanal, LCH, LCH-Priorität, Kanalzugriffsklasse und/oder anderen die QoS identifizierenden Informationen konfiguriert wird.

10. Verfahren nach einem der Ansprüche 8 bis 9, wobei die mindestens eine Bedingung eine Zeitbedingung zum Auslösen einer Wiederherstellungsprozedur umfasst, die damit in Beziehung steht, ob der von der UE verwendete Dienst kritisch ist oder nicht.

11. Verfahren nach einem der Ansprüche 8 bis 10, wobei der eine oder die mehreren Zähler und Zeitgeber für Kanalzugriffsfehler definiert sind, und wobei ein oder mehrere Zähler und Zeitgeber für verschiedene Stufen von QoS-Anforderungen von Diensten unterschiedlich konfiguriert sind.

12. Verfahren nach einem der Ansprüche 8 bis 11, wobei die Zugriffsbedingung eine Anzahl von Kanalzugriffsfehlern pro Zeiteinheit zum Auslösen der Wiederherstellungsprozedur definiert.

13. Verfahren nach einem der Ansprüche 8 bis 12, wobei die Wiederherstellungsprozedur eines oder mehrere von Folgenden umfasst: Wiederherstellung nach einem Funkverbindungsfehler, RLF; Wechsel zu anderem Bandbreitenteil, Kanal, Unterband oder Träger oder zu anderer Zelle; Handover; oder RLF-Meldungsmechanismus einer sekundären Zellgruppe, SCG, für eine sekundäre Zelle, SCell.

14. Verfahren nach einem der Ansprüche 8 bis 13, wobei die QoS-Anforderung umfasst, dass die Wiederherstellungsprozedur je nach einer Priorität einer Übertragung anders behandelt wird, wobei Übertragungen verschiedene Prioritäten aufweisen.

15. Verfahren nach Anspruch 14, wobei die Priorität eine Uplink-,UL-,Prioritätsstufe ist; wobei die UL-Prioritätsstufe mindestens eines von Folgenden umfasst:
- einen Logikkanal, dem ein bestimmter QoS-Fluss oder Funkträger zugeordnet ist;
- eine Logikkanalpriorität, der ein bestimmter QoS-Fluss oder Funkträger zugeordnet ist;
- eine Logikkanalgruppe, LCG, der ein oder mehrere Logikkanäle zugeordnet sind;
- eine Kanalzugriffsprioritätsklasse, der ein oder mehrere Logikkanäle zugeordnet sind oder der physikalische Kanäle zugeordnet sind oder der L1-Steuersignalisierung zugeordnet ist; und
- eine Ursache oder einen Typ von Direktzugriff.

16. Benutzereinrichtung, UE, (10) zum Handhaben von Kommunikation in einem unlizenzierten Spektrum in einem drahtlosen Kommunikationsnetzwerk, wobei die UE konfiguriert ist zum:
Auslösen einer Wiederherstellungsprozedur bei Erfüllung einer oder mehrerer Bedingungen, wobei mindestens eine Bedingung der einen oder der mehreren Bedingungen mit einer Dienstqualitäts-,QoS-,Anforderung oder einer Stufe einer Dienstqualität-,QoS-,Anforderung eines Dienstes, der von der UE verwendet wird, in Beziehung steht,
wobei die mindestens eine Bedingung eine Zugriffsbedingung zum Auslösen einer Wiederherstellungsprozedur umfasst, wobei die Zugriffsbedingung auf einem oder mehreren Zählern oder Zeitgebern in Bezug auf einen Kanalzugriffsfehler, der ein Kanalfreiheitsbeurteilungsfehler ist, und der QoS-Anforderung oder der Stufe der QoS-Anforderung des von der UE verwendeten Dienstes basiert, und
wobei die Zugriffsbedingung Kanalfreiheitsbeurteilungsfehler in Bezug auf Uplink-,UL-,Übertragungen umfasst, und wobei die Zugriffsbedingung einen Zählerwert umfasst, der mit konfigurierten Prioritätsstufen verschiedener Kanalzugriffsverfahren assoziiert ist.

17. UE nach Anspruch 16, wobei die mindestens eine Bedingung eine Zeitbedingung zum Auslösen einer Wiederherstellungsprozedur umfasst, die damit in Beziehung steht, ob der von der UE verwendete Dienst kritisch ist oder nicht.

18. UE nach einem der Ansprüche 16 bis 17, wobei der eine oder die mehreren Zähler und Zeitgeber für Kanalzugriffsfehler definiert sind, und wobei ein oder mehrere Zähler und Zeitgeber für verschiedene Stufen von QoS-Anforderungen von Diensten unterschiedlich konfiguriert sind.

19. Funknetzwerkknoten (12) zum Handhaben von Kommunikation einer drahtlosen Benutzereinrichtung, UE, (10) in einem unlizenzierten Spektrum in einem drahtlosen Kommunikationsnetzwerk, wobei der Funknetzwerkknoten konfiguriert ist zum:
Konfigurieren der UE mit einer oder mehreren Bedingungen zum Auslösen einer Wiederherstellungsprozedur an der UE (10), wobei mindestens eine Bedingung der einen oder der mehreren Bedingungen mit einer Dienstqualitäts-,QoS-,Anforderung oder einer Stufe einer Dienstqualität-,QoS-,Anforderung eines Dienstes, der von der UE verwendet wird, in Beziehung steht,
wobei die mindestens eine Bedingung eine Zugriffsbedingung zum Auslösen einer Wiederherstellungsprozedur umfasst, wobei die Zugriffsbedingung auf einem oder mehreren Zählern oder Zeitgebern in Bezug auf einen Kanalzugriffsfehler, der ein Kanalfreiheitsbeurteilungsfehler ist, und der QoS-Anforderung oder der Stufe der QoS-Anforderung des von der UE verwendeten Dienstes basiert, und
wobei die Zugriffsbedingung Kanalfreiheitsbeurteilungsfehler in Bezug auf Uplink-,UL-,Übertragungen umfasst, und wobei die Zugriffsbedingung einen Zählerwert umfasst, der mit konfigurierten Prioritätsstufen verschiedener Kanalzugriffsverfahren assoziiert ist.

20. Funknetzwerkknoten (12) nach Anspruch 19, wobei die mindestens eine Bedingung pro UE, Dienst, Logikkanal, LCH, LCH-Priorität, Kanalzugriffsklasse und/oder anderen die QoS identifizierenden Informationen konfiguriert wird.

21. Funknetzwerkknoten (12) nach einem der Ansprüche 19 bis 20, wobei die mindestens eine Bedingung eine Zeitbedingung zum Auslösen einer Wiederherstellungsprozedur umfasst, die damit in Beziehung steht, ob der von der UE verwendete Dienst kritisch ist oder nicht.

22. Computerprogrammprodukt, umfassend Anweisungen, die bei Ausführung auf mindestens einem Prozessor den mindestens einen Prozessor veranlassen, die Verfahren nach einem der Ansprüche 1 bis 7, wie von der UE durchgeführt, und 8 bis 15, wie vom Funknetzwerkknoten durchgeführt, auszuführen.

## Revendications

1. Procédé réalisé par un équipement utilisateur, UE, (10) pour gérer une communication dans un spectre sans licence dans un réseau de communication sans fil, le procédé comprenant
- le déclenchement (501) d'une procédure de rétablissement lors de la satisfaction d'une ou plusieurs conditions, dans lequel au moins une condition, parmi les une ou plusieurs conditions, est liée à une exigence de qualité de service, QoS, ou à un niveau d'une exigence de qualité de service, QoS, d'un service utilisé par l'UE,
dans lequel l'au moins une condition comprend une condition d'accès pour déclencher une procédure de rétablissement, ladite condition d'accès étant basée sur un ou plusieurs compteurs ou minuteurs liés à un échec d'accès de canal, qui est un échec d'évaluation de canal libre, et l'exigence de QoS ou le niveau d'exigence de QoS du service utilisé par l'UE, et
dans lequel la condition d'accès comprend des échecs d'évaluation de canal libre liés à des transmissions de liaison montante, UL, et dans lequel la condition d'accès comprend une valeur de compteur qui est associée à des niveaux de priorité configurés de différents procédés d'accès de canal.

2. Procédé selon la revendication 1, dans lequel l'au moins une condition comprend une condition de temps pour déclencher une procédure de rétablissement qui est liée à la détermination que le service utilisé par l'UE est critique ou non.

3. Procédé selon la revendication 1 ou 2, dans lequel les un ou plusieurs compteurs et minuteurs sont définis pour des échecs d'accès de canal, et les un ou plusieurs compteurs et minuteurs sont configurés différemment pour différents niveaux d'exigences de QoS de services.

4. Procédé selon l'une quelconque des revendications 1 à 3, dans lequel la condition d'accès définit un nombre d'échecs d'accès de canal par unité de temps pour déclencher la procédure de rétablissement.

5. Procédé selon l'une quelconque des revendications 1 à 4, dans lequel la procédure de rétablissement comprend un ou plusieurs parmi ce qui suit : un rétablissement d'échec de liaison radio, RLF ; une commutation à une autre partie de bande passante, un autre canal, une autre sous-bande, une autre cellule ou une autre porteuse ; un transfert intercellulaire ; ou, pour une cellule secondaire, SCell, un mécanisme de rapport de RLF de groupe de cellules secondaires, SCG.

6. Procédé selon l'une quelconque des revendications 1 à 5, dans lequel l'exigence de QoS comprend que la procédure de rétablissement est traitée différemment en fonction d'une priorité d'une transmission, dans lequel des transmissions sont de priorités différentes.

7. Procédé selon la revendication 6, dans lequel la priorité est un niveau de priorité de liaison montante, UL ; dans lequel le niveau de priorité d'UL comprend l'un quelconque parmi ce qui suit :
- un canal logique auquel un certain débit de QoS ou un certain support radio est associé ;
- une priorité de canal logique à laquelle un certain débit de QoS ou un certain support radio est associé ;
- un groupe de canaux logiques, LCG, auquel un ou plusieurs canaux logiques sont associés ;
- une catégorie de priorité d'accès de canal à laquelle un ou plusieurs canaux logiques sont associés ou à laquelle des canaux physiques sont associés, ou à laquelle une signalisation de commande L1 est associée ; et
- une raison ou un type d'accès aléatoire.

8. Procédé réalisé par un noeud de réseau radio (12) pour gérer une communication d'un équipement utilisateur, UE, dans un spectre sans licence dans un réseau de communication sans fil, le procédé comprenant
la configuration (601) de l'UE avec une ou plusieurs conditions pour déclencher une procédure de rétablissement à l'UE, dans lequel au moins une condition, parmi les une ou plusieurs conditions, est liée à une exigence de qualité de service, QoS, ou à un niveau d'exigence de QoS d'un service utilisé par l'UE,
dans lequel l'au moins une condition comprend une condition d'accès pour déclencher une procédure de rétablissement, ladite condition d'accès étant basée sur un ou plusieurs compteurs ou minuteurs liés à un échec d'accès de canal, qui est un échec d'évaluation de canal libre, et l'exigence de QoS ou le niveau d'exigence de QoS du service utilisé par l'UE, et
dans lequel la condition d'accès comprend des échecs d'évaluation de canal libre liés à des transmissions de liaison montante, UL, et dans lequel la condition d'accès comprend une valeur de compteur qui est associée à des niveaux de priorité configurés de différents procédés d'accès de canal.

9. Procédé selon la revendication 8, dans lequel l'au moins une condition est configurée par UE, par service, par canal logique, LCH, par priorité de LCH, par catégorie d'accès de canal et/ou par d'autres informations d'identification de QoS.

10. Procédé selon la revendication 8 ou 9, dans lequel l'au moins une condition comprend une condition de temps pour déclencher une procédure de rétablissement qui est liée à la détermination que le service utilisé par l'UE est critique ou non.

11. Procédé selon l'une quelconque des revendications 8 à 10, dans lequel les un ou plusieurs compteurs et minuteurs sont définis pour des échecs d'accès de canal, et les un ou plusieurs compteurs et minuteurs sont configurés différemment pour différents niveaux d'exigences de QoS de services.

12. Procédé selon l'une quelconque des revendications 8 à 11, dans lequel la condition d'accès définit un nombre d'échecs d'accès de canal par unité de temps pour déclencher la procédure de rétablissement.

13. Procédé selon l'une quelconque des revendications 8 à 12, dans lequel la procédure de rétablissement comprend un ou plusieurs parmi ce qui suit : un rétablissement d'échec de liaison radio, RLF ; une commutation à une autre partie de bande passante, un autre canal, une autre sous-bande, une autre cellule ou une autre porteuse ; un transfert intercellulaire ; ou, pour une cellule secondaire, SCell, un mécanisme de rapport de RLF de groupe de cellules secondaires, SCG.

14. Procédé selon l'une quelconque des revendications 8 à 13, dans lequel l'exigence de QoS comprend que la procédure de rétablissement est traitée différemment en fonction d'une priorité d'une transmission, dans lequel des transmissions sont de priorités différentes.

15. Procédé selon la revendication 14, dans lequel la priorité est un niveau de priorité de liaison montante, UL ; dans lequel le niveau de priorité d'UL comprend l'un quelconque parmi ce qui suit :
- un canal logique auquel un certain débit de QoS ou un certain support radio est associé ;
- une priorité de canal logique à laquelle un certain débit de QoS ou un certain support radio est associé ;
- un groupe de canaux logiques, LCG, auquel un ou plusieurs canaux logiques sont associés ;
- une catégorie de priorité d'accès de canal à laquelle un ou plusieurs canaux logiques sont associés ou à laquelle des canaux physiques sont associés, ou à laquelle une signalisation de commande L1 est associée ; et
- une raison ou un type d'accès aléatoire.

16. Equipement utilisateur, UE, (10) pour gérer une communication dans un spectre sans licence dans un réseau de communication sans fil, dans lequel l'UE est configuré pour
déclencher une procédure de rétablissement lors de la satisfaction d'une ou plusieurs conditions, dans lequel au moins une condition, parmi les une ou plusieurs conditions, est liée à une exigence de qualité de service, QoS, ou à un niveau d'une exigence de qualité de service, QoS, d'un service utilisé par l'UE,
dans lequel l'au moins une condition comprend une condition d'accès pour déclencher une procédure de rétablissement, ladite condition d'accès étant basée sur un ou plusieurs compteurs ou minuteurs liés à un échec d'accès de canal, qui est un échec d'évaluation de canal libre, et l'exigence de QoS ou le niveau d'exigence de QoS du service utilisé par l'UE, et
dans lequel la condition d'accès comprend des échecs d'évaluation de canal libre liés à des transmissions de liaison montante, UL, et dans lequel la condition d'accès comprend une valeur de compteur qui est associée à des niveaux de priorité configurés de différents procédés d'accès de canal.

17. UE selon la revendication 16, dans lequel l'au moins une condition comprend une condition de temps pour déclencher une procédure de rétablissement qui est liée à la détermination que le service utilisé par l'UE est critique ou non.

18. UE selon la revendication 16 ou 17, dans lequel les un ou plusieurs compteurs et minuteurs sont définis pour des échecs d'accès de canal, et les un ou plusieurs compteurs et minuteurs sont configurés différemment pour différents niveaux d'exigences de QoS de services.

19. Noeud de réseau radio (12) pour gérer une communication d'un équipement utilisateur, UE, (10) dans un spectre sans licence dans un réseau de communication sans fil, dans lequel le noeud de réseau radio est configuré pour :
configurer l'UE avec une ou plusieurs conditions pour déclencher une procédure de rétablissement à l'UE (10), dans lequel au moins une condition, parmi les une ou plusieurs conditions, est liée à une exigence de qualité de service, QoS, ou un niveau d'exigence de QoS d'un service utilisé par l'UE,
dans lequel l'au moins une condition comprend une condition d'accès pour déclencher une procédure de rétablissement, ladite condition d'accès étant basée sur un ou plusieurs compteurs ou minuteurs liés à un échec d'accès de canal, qui est un échec d'évaluation de canal libre, et l'exigence de QoS ou le niveau d'exigence de QoS du service utilisé par l'UE, et
dans lequel la condition d'accès comprend des échecs d'évaluation de canal libre liés à des transmissions de liaison montante, UL, et dans lequel la condition d'accès comprend une valeur de compteur qui est associée à des niveaux de priorité configurés de différents procédés d'accès de canal.

20. Noeud de réseau radio (12) selon la revendication 19, dans lequel l'au moins une condition est configurée par UE, par service, par canal logique, LCH, par priorité de LCH, par catégorie d'accès de canal et/ou par d'autres informations d'identification de QoS.

21. Noeud de réseau radio (12) selon la revendication 19 ou 20, dans lequel l'au moins une condition comprend une condition de temps pour déclencher une procédure de rétablissement qui est liée à la détermination que le service utilisé par l'UE est critique ou non.

22. Produit de programme informatique comprenant des instructions qui, lorsqu'elles sont exécutées sur au moins un processeur, amènent l'au moins un processeur à réaliser l'un quelconque des procédés selon les revendications 1 à 7 telles que mises en œuvre par l'UE ou les revendications 8 à 15 telles que mises en œuvre par le noeud de réseau radio.
